(19) Europäisches Patentamt
European Patent Office
Office européen des brevets

(11) EP 4 596 588 A1

(12) **EUROPEAN PATENT APPLICATION**
published in accordance with Art. 153(4) EPC

(43) Date of publication:
**06.08.2025 Bulletin 2025/32**

(21) Application number: **23881875.1**

(22) Date of filing: **25.10.2023**

(51) International Patent Classification (IPC):
***C08F 4/649*** *(2006.01)* ***C08F 4/654*** *(2006.01)*
***C08F 4/646*** *(2006.01)* ***C08F 110/06*** *(2006.01)*
***C08F 110/00*** *(2006.01)* ***C08F 10/06*** *(2006.01)*
***C08F 10/00*** *(2006.01)*

(52) Cooperative Patent Classification (CPC):
**C08F 4/646; C08F 4/649; C08F 4/654; C08F 10/00; C08F 10/06; C08F 110/00; C08F 110/06**

(86) International application number:
**PCT/CN2023/126424**

(87) International publication number:
**WO 2024/088298 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.10.2022 CN 202211320920**
**26.10.2022 CN 202211321506**
**26.10.2022 CN 202211321006**
**26.10.2022 CN 202211321023**
**26.10.2022 CN 202211321504**

(71) Applicants:
- **China Petroleum & Chemical Corporation**
  **Beijing 100728 (CN)**
- **Sinopec (Beijing) Research Institute of Chemical Industry Co., Ltd.**
  **Beijing 100013 (CN)**

(72) Inventors:
- **LIU, Yuexiang**
  **Beijing 100013 (CN)**
- **LIU, Tao**
  **Beijing 100013 (CN)**
- **XIE, Jijia**
  **Beijing 100013 (CN)**
- **XIA, Xianzhi**
  **Beijing 100013 (CN)**
- **ZHOU, Junling**
  **Beijing 100013 (CN)**
- **SONG, Yang**
  **Beijing 100013 (CN)**
- **ZHAO, Jin**
  **Beijing 100013 (CN)**
- **LING, Yongtai**
  **Beijing 100013 (CN)**
- **ZHOU, Qilong**
  **Beijing 100013 (CN)**
- **LI, Weili**
  **Beijing 100013 (CN)**
- **XU, Xiudong**
  **Beijing 100013 (CN)**
- **CHEN, Long**
  **Beijing 100013 (CN)**
- **REN, Chunhong**
  **Beijing 100013 (CN)**
- **YANG, Rui**
  **Beijing 100013 (CN)**
- **MA, Changyou**
  **Beijing 100013 (CN)**
- **GAO, Futang**
  **Beijing 100013 (CN)**
- **TAN, Yang**
  **Beijing 100013 (CN)**
- **HE, Ce**
  **Beijing 100013 (CN)**

(74) Representative: **Hoffmann Eitle**
**Patent- und Rechtsanwälte PartmbB**
**Arabellastraße 30**
**81925 München (DE)**

(54) **SOLID CATALYST COMPONENT FOR OLEFIN POLYMERIZATION, AND PREPARATION METHOD THEREFOR AND USE THEREOF**

(57) The present invention relates to the field of catalysts for olefin polymerization, and discloses a solid

catalyst component for olefin polymerization. The solid catalyst component comprises magnesium, titanium, a halogen, a poly(α-olefin), and an internal electron donor, wherein a Ti2p spectrum obtained from XPS analysis of the solid catalyst component is subjected to peak separation by means of Gaussian-Lorentzian peak-separation fitting, and the result of the peak separation shows that the spectrum peaks of the Ti2p3/2 orbit have at least three characteristic peaks at positions where an electron binding energy is 459.9-454.9 eV. The solid catalyst component, when used in olefin polymerization, has the characteristics of slow decay of activity with the increase of storage time and a low fine powder content of the resulting polymer.

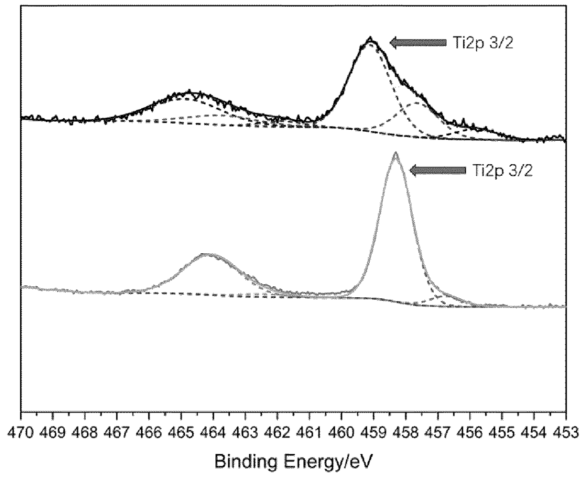


FIG. 2

## Description

### CROSS-REFERENCE TO RELATED APPLICATIONS

The application claims the benefits of the Chinese patent application No. "202211320920.2", filed on October 26, 2022, the Chinese patent application No. "202211321506.3", filed on October 26, 2022, the Chinese patent application No. "202211321006.X", filed on October 26, 2022, the Chinese patent application No. "202211321023.3", filed on October 26, 2022, and the Chinese patent application No. "202211321504.4", filed on October 26, 2022, the contents of which are specifically and entirely incorporated herein by reference.

### TECHNICAL FIELD

The present invention relates to the field of catalysts for olefin polymerization, in particular to a solid catalyst component for olefin polymerization, a preparation method therefor and use thereof.

### BACKGROUND ART

The Ziegler-Natta type spherical catalysts are widely used in ring tube polypropylene process units for the production of propylene homopolymer, propylene/ethylene (or butylene) random copolymer, and impact copolymer, the catalysts have the characteristics such as high polymerization activity, high stereo-structural directionality, and high regularity degree of polymer particles. Spherical catalysts are also used in gas-phase polypropylene and polyethylene processes equipped with pre-polymerization units (e.g., the SHPERIZONE and SHPERILENE process units) for the production of polypropylene and polyethylene. Although the process units are equipped with the pre-polymerization units, there is still a fragmentation phenomenon of the catalyst particles and polymer particles during the production process of resins, resulting in a certain content of fine powder in the polymer, especially in the production of propylene homopolymer with a high melt mass flow rate (MFR), wherein the polymer has a large content of fine powder, which affects stability and long-cycle operation of the device. In contrast, the polypropylene process device without a pre-polymerization operation unit, such as the UNIPOL process unit, is not suitable for the use of a Ziegler-Natta type spherical catalyst, the reason maybe that the catalyst or polymer particles are almost completely broken up during the polymerization process, generating a large amount of fine powder.

US9453088B2 discloses a prepolymerized catalyst for olefin polymerization, the prepolymerized catalyst is a catalyst component having an average particle size lower than 30μm, a prepolymerization multiple less than 50g polymer/g catalyst, containing 1,3-diethers and aromatic esters; the preparation method comprises the following steps: initially preparing a spherical catalyst containing 1,3-diether electron donor and aromatic ester electron donor, then pre-polymerizing with the $C_2$-$C_{10}$ olefins to prepare a prepolymerized catalyst. CN1421468A discloses a propylene polymerizing or co-polymerizing process, the process comprises the following steps: subjecting the Ziegler-Natta type catalyst to the pre-polymerization reaction with ethylene or α-olefin at the temperature from -10°C to 80°C, and controlling the pre-polymerization multiple to be 6-50,000, then carrying out the propylene polymerization reaction. US7329714B2 discloses a method of polymerizing propylene comprising the step of pre-polymerization, the method comprises: subjecting a Ziegler-Zatta type catalyst to a pre-polymerization reaction with propylene or 4-methyl-1-pentene at a temperature range of 0-40°C, then performing the propylene polymerization reaction.

However, in the preparation methods of the prepolymerization catalyst, when ethylene is used as a prepolymerization monomer for preparing the prepolymerization catalyst, the catalyst inevitably suffers from a fragmentation phenomenon, and the content of polymer fine powder is higher during the process of carrying out the olefin polymerization reaction; if the prepolymerization catalyst is prepared by using propylene or α-olefin as the prepolymerization monomer, when the storage time is prolonged, the catalyst activity is rapidly attenuated, thus the catalyst has a low commercial value. The polymerization activity of the polymerization catalyst prepared through ethylene prepolymerization or propylene prepolymerization has an attenuated polymerization activity when the storage time is extended, the polymerization activity is "unstable", the polymerization catalyst cannot meet the requirements of industrial application.

### SUMMARY OF THE INVENTION

In view of this, the present invention aims to overcome the defect in the prior art that the Ziegler-Natta type spherical catalyst has a rapidly attenuated polymerization activity along with the extension of storage time, and provides a solid catalyst component for olefin polymerization, a preparation method therefor and use thereof.

In the first aspect, the present invention provides a solid catalyst component for olefin polymerization, the solid catalyst component comprises magnesium, titanium, a halogen, a poly(α-olefin), and an internal electron donor, wherein a Ti2p spectrum obtained from XPS analysis of the solid catalyst component is subjected to peak separation by means of

Gaussian-Lorentzian peak-separation fitting, and the result of the peak separation shows that the spectrum peaks of the $Ti2p_{3/2}$ orbit have at least three characteristic peaks at positions where an electron binding energy is 459.9-454.9 eV; Wherein the method of Gaussian-Lorentzian peak-separation fitting includes setting that a Lorentz-Gaussian ratio is 30%, the difference between an electron binding energy of the spectrum peak of the $Ti2p_{1/2}$ orbit and an electron binding energy of the spectrum peak of the $Ti2p_{3/2}$ orbit is 5.9 eV, the half-peak width of the spectrum peak of the $Ti2p_{1/2}$ orbit is 1.7 times the half-peak width of the spectrum peak of the $Ti2p_{3/2}$ orbit, the peak height of the spectrum peak of the $Ti2p_{1/2}$ orbit is 0.28 times the peak height of the spectrum peaks of the $Ti2p_{3/2}$ orbit, and each characteristic peak of the spectrum peaks of the $Ti2p_{3/2}$ orbit has the same half-peak width.

In the second aspect, the present invention provides a method for preparing a solid catalyst component for olefin polymerization, the method comprises the following steps:

(1) Contacting a catalyst component A, alkylaluminum, and an external electron donor in the presence of an inert solvent to carry out a reaction; the catalyst component A contains titanium, magnesium, halogen, and an internal electron donor;
(2) Mixing the reaction system obtained in step (1) with $\alpha$-olefin to carry out a polymerization reaction;
(3) Removing the unreacted $\alpha$-olefin in step (2), and adding hydrogen gas into the obtained reaction system for carrying out a reaction.

In the third aspect, the invention provides the solid catalyst component prepared with the aforementioned method.

In the fourth aspect, the present invention provides a catalyst system for olefin polymerization, the catalyst system comprising the aforementioned solid catalyst component and/or the solid catalyst component prepared with the aforementioned method, alkylaluminum and an optional external electron donor compound or a reaction product thereof.

In the fifth aspect, the present invention provides a use of the aforementioned solid catalyst component and/or the solid catalyst component prepared with the aforementioned method and/or the aforementioned catalyst system in the olefin polymerization.

In the sixth aspect, the present invention provides a method of olefin polymerization, the method comprises: subjecting the olefins to the polymerization reaction in the presence of the aforementioned solid catalyst component, and/or the solid catalyst component prepared with the aforementioned method, and/or the aforementioned catalyst system.

The invention has the following advantages: the solid catalyst component provided by the present invention belongs to the Ziegler-Zatta type prepolymerization catalyst, which has the characteristics of slow decay of polymerization activity with the increase of storage time and a low content of fine powder in the polymer obtained from polymerization of the solid catalyst component. The solid catalyst component is not only suitable for an olefin polymerization device with a prepolymerization operation unit, but also suitable for a polyolefin device without the prepolymerization operation unit.

## BRIEF DESCRIPTION OF THE DRAWINGS

FIG. 1 illustrates an XRD pattern of the catalyst E-1 of Example 1 (upper part) and the catalyst CE-1 of Comparative Example 1 (lower part);
FIG. 2 is a diagram showing XPS peak-separation fitting of the catalyst E-1 of Example 1 (upper part) and the catalyst CE-1 of Comparative Example 1 (lower part).

## DESCRIPTION OF THE PREFERRED EMBODIMENT

The present invention is further illustrated with reference to the specific embodiments, which are not construed as imposing any limitation to the invention.

According to the first aspect, the present invention provides a solid catalyst component for olefin polymerization, the solid catalyst component comprises magnesium, titanium, a halogen, a poly($\alpha$-olefin), and an internal electron donor, wherein a Ti2p spectrum obtained from XPS analysis of the solid catalyst component is subjected to peak separation by means of Gaussian-Lorentzian peak-separation fitting, and the result of the peak separation shows that the spectrum peaks of the $Ti2p_{3/2}$ orbit have at least three characteristic peaks at positions where an electron binding energy is 459.9-454.9 eV;
Wherein the method of Gaussian-Lorentzian peak-separation fitting includes setting that a Lorentz-Gaussian ratio is 30%, the difference between an electron binding energy of the spectrum peak of the $Ti2p_{1/2}$ orbit and an electron binding energy of the spectrum peak of the $Ti2p_{3/2}$ orbit is 5.9 eV, the half-peak width of the spectrum peak of the $Ti2p_{1/2}$ orbit is 1.7 times

the half-peak width of the spectrum peak of the $Ti2p_{3/2}$ orbit, the peak height of the spectrum peak of the $Ti2p_{1/2}$ orbit is 0.28 times the peak height of the spectrum peaks of the $Ti2p_{3/2}$ orbit, and each characteristic peak of the spectrum peaks of the $Ti2p_{3/2}$ orbit has the same half-peak width.

It is well-known among those skilled in the art, after a Ti2p spectrogram obtained from an X-ray Photoelectron Spectroscopy (XPS) analysis of the solid catalyst component is subjected to peak separation by means of Gaussian-Lorentzian peak-separation fitting, the characteristic peaks in the spectrum peak of $Ti2p_{1/2}$ orbit and the characteristic peaks in the spectrum peak of the $Ti2p_{3/2}$ orbit appear in pairs; wherein the difference between an electron binding energy of the spectrum peak of the $Ti2p_{1/2}$ orbit and an electron binding energy of the spectrum peak of the $Ti2p_{3/2}$ orbit refers to "the difference between an electron binding energy of the characteristic peak in the spectrum peak of the $Ti2p_{1/2}$ orbit and an electron binding energy of the characteristic peak appearing in pairs in the spectrum peak of the $Ti2p_{3/2}$ orbit". Similarly, the ratio of half-peak width of the spectrum peak of the $Ti2p_{1/2}$ orbit to the half-peak width of the spectrum peak of the $Ti2p_{3/2}$ orbit means "the ratio of a half-value width of the characteristic peak in the spectrum peak of the $Ti2p_{1/2}$ orbit and a half-value width of the characteristic peak appearing in pairs in the spectrum peak of the $Ti2p_{3/2}$ orbit"; the ratio of the peak height of the spectrum peak of the $Ti2p_{1/2}$ orbit to the peak height of the spectrum peaks of the $Ti2p_{3/2}$ orbit refers to "the ratio of the peak height of the characteristic peak in the spectrum peak of the $Ti2p_{1/2}$ orbit and the peak height of the characteristic peak appearing in pairs in the spectrum peak of the $Ti2p_{3/2}$ orbit". For example, these characteristic peaks in the spectrum peaks of the $Ti2p_{3/2}$ orbit in the XPS spectrum of the solid catalyst component are named sequentially as a first characteristic peak, a second characteristic peak, and a third characteristic peak ect according to the electron binding energy from high to low; these characteristic peaks in the spectrum peaks of the $Ti2p_{1/2}$ orbit are named sequentially as the characteristic peak I, the characteristic peak II, and the characteristic peak III ect according to the electron binding energy from high to low; the difference between an electron binding energy of the spectrum peak of the $Ti2p_{1/2}$ orbit and an electron binding energy of the spectrum peak of the $Ti2p_{3/2}$ orbit means that "each of the difference between an electron binding energy of the first characteristic peak and an electron binding energy of the characteristic peak I, the difference between an electron binding energy of the second characteristic peak and an electron binding energy of the characteristic peak II, and the difference between an electron binding energy of the third characteristic peak and an electron binding energy of the characteristic peak III is 5.9 eV". Similarly, the ratio of a half-peak width of the spectrum peak of the $Ti2p_{1/2}$ orbit to a half-peak width of the spectrum peak of the $Ti2p_{3/2}$ orbit, and the ratio of the peak height of the spectrum peak of the $Ti2p_{1/2}$ orbit to the peak height of the spectrum peak of the $Ti2p_{3/2}$ orbit are defined in the same manner.

According to the solid catalyst component provided by the invention, the electron binding energy of Ti2p of titanium element and the electron binding energy of C1s of carbon element are measured by an X-ray photoelectron spectrometer (XPS). XPS adopts a monochromatized Al K$\alpha$ ray source, and an electronic neutralization gun is used for charge neutralization until the surface charge of the sample is completely neutralized. The high-resolution spectrogram is obtained under the conditions of a pass energy of 20eV and a step size of 0.05eV, and the analysis area is 500$\mu$m$^2$.

The preparation method of the XPS test sample comprises: tableting a sample on a non-conductive double-sided adhesive in a glove box by using an infrared tablet press, transferring the pressed sample into an air-sensitive sample protection table for performing sealed storage, ad then rapidly transferring the sensitive sample protection table into a sample preparation chamber of the XPS for vacuumizing, opening a sealing cover of the sensitive sample protection table after the pressure of the preparation chamber is reduced to below $10^{-6}$ mbar, and shifting the sample to an analysis chamber for carrying out the XPS test after the pressure of the preparation chamber is again reduced to below $10^{-6}$ mbar. The charge of the prepolymerized catalyst (i.e., the aforementioned solid catalyst component) is calibrated based on the peak top binding energy value 284.80eV of C1s of the polypropylene or polyethylene contained in the catalyst.

In some preferred embodiments, the XPS spectrum of the solid catalyst component shows that the spectrum peaks of the $Ti2p_{3/2}$ orbit have 3-5 characteristic peaks at positions where an electron binding energy range is 459.9-454.9 eV, for instance, the spectrum peaks of the $Ti2p_{3/2}$ orbit have 3 characteristic peaks, 4 characteristic peaks, or 5 characteristic peaks at positions where an electron binding energy range is 459.9-454.9 eV; the characteristic peaks in the spectrum peak of the $Ti2p_{3/2}$ orbit of the XPS spectrum of the solid catalyst component are named sequentially as a first characteristic peak, a second characteristic peak, a third characteristic peak, a fourth characteristic peak, a fifth characteristic peak, and the like according to the electron binding energy from high to low. In a particularly preferable circumstance, the XPS spectrum of the solid catalyst component shows that the spectrum peaks of the $Ti2p_{3/2}$ orbit have three characteristic peaks at positions where an electron binding energy range is 459.9-454.9 eV.

In some preferred embodiments, the spectrum peak of the $Ti2p_{3/2}$ orbit of the solid catalyst component has three characteristic peaks at an electron binding energy rang of 459.9eV-454.9eV, the three characteristic peaks are named sequentially as a first characteristic peak, a second characteristic peak, and a third characteristic peak according to the electron binding energy from high to low, wherein the first characteristic peak has an electron binding energy of 459.9eV-458.97eV, the second characteristic peak has an electron binding energy of 458eV-457.45eV, and the third characteristic peak has an electron binding energy of 456.2eV-454.9eV. The naming of the three characteristic peaks does not impose a limiting effect on the technical scheme of the invention, it merely serves to distinguish the different characteristic peaks for providing a precise description.

In some embodiments, the spectrum peak of the $Ti2p_{1/2}$ orbit of the solid catalyst component has an electron binding energy of 467eV-460eV. After a Ti2p spectrum obtained from XPS analysis of the solid catalyst component is subjected to peak separation by means of Gaussian-Lorentzian peak-separation fitting, the spectrum peak of the $Ti2p_{1/2}$ orbit has the same number of characteristic peaks as the spectrum peak of the $Ti2p_{3/2}$ orbit.

In some embodiments, titanium has an electron binding energy of 455.40eV-455.85eV of the $Ti2p_{3/2}$ orbit, for example, an electron binding energy of 455.42eV, 455.44eV, 455.45eV, 455.46eV, 455.47eV, 455.50eV, 455.54eV, 455.62eV, 455.63eV, 455.64eV, 455.65eV, 455.66eV, 455.67eV, 455.68eV, 455.69eV, 455.70eV, 455.71eV, 455.72eV, 455.79eV, 455.80eV, 455.81eV, 455.82eV, or 455.83eV of the $Ti2p_{3/2}$ orbit.

In some embodiments, titanium has an electron binding energy of 458.97eV-459.25eV and/or 457.45eV-458.00eV of the $Ti2p_{3/2}$ orbit, in addition to an electron binding energy of 456.20eV-454.90eV, preferably 455.40eV-455.85eV. For instance, titanium has an electron binding energy of 459.09eV-459.19eV and/or 457.60-457.75eV of the $Ti2p_{3/2}$ orbit, in another example, titanium has an electron binding energy of 459.05eV-459.15eV and/or 457.45 eV-457.55eV of the $Ti2p_{3/2}$ orbit, in a further example, titanium has an electron binding energy of 458.97eV-459.25eV and/or 457.53-458.00 eV of the $Ti2p_{3/2}$ orbit.

In some preferred embodiments, the ratio of the peak area of the third characteristic peak to the sum of the peak areas of the first characteristic peak, the second characteristic peak, and the third characteristic peak is within the range of 5-20%, preferably within the range of 5-15%. (e.g., 5%, 6%, 7%, 8%, 9%, 10%, 11%, 12%, 13%, 14%, 15%, and the ranges consisting of any two point values). Wherein the peak area of the first characteristic peak, the peak area of the second characteristic peak, and the peak area of the third characteristic peak are sequentially denoted as S1, S2, and S3.

In some preferred embodiments, the solid catalyst component does not contain a detectable amount of the group IVB element other than Ti. For example, the solid catalyst component does not contain a detectable amount of Zr and/or Hf.

According to the solid catalyst component provided by the invention, the poly($\alpha$-olefin) is selected from poly $C_2$-$C_{10}$ olefins, preferably one or more selected from the group consisting of polyethylene, polypropylene, polybutene, polyoctene, and polyisoprene, more preferably polypropylene.

According to the solid catalyst component provided by the invention, wherein the internal electron donor is at least one of a diol ester compound, 1,3-diether compound, and carboxylic ester.

In some preferred embodiments, the diol ester compound has a chemical structure represented by formula (1):

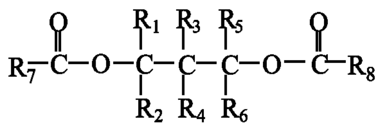

Formula (1)

In the formula (1), $R_1$-$R_6$ are the same or different, each independently selected from hydrogen, amino, $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{10}$ alkaryl, and $C_7$-$C_{10}$ aralkyl; two or more of $R_1$-$R_6$ are optionally bonded to each other to synthesize one or more condensed ring structures; $R_7$ and $R_8$ are the same or different, and each independently selected from the group consisting of $C_1$-$C_{10}$ straight chain alkyl, $C_3$-$C_{10}$ branched chain alkyl, $C_3$-$C_{20}$ cycloalkyl, $C_6$-$C_{20}$ aryl, $C_7$-$C_{20}$ alkaryl, and $C_7$-$C_{20}$ aralkyl;

The solid catalyst component provided by the invention is characterized in that in the formula (1), $R_1$-$R_6$ are the same or different, each independently selected from hydrogen, amino, $C_1$-$C_6$ straight chain alkyl, $C_3$-$C_8$ branched chain alkyl, $C_3$-$C_{10}$ cycloalkyl, $C_6$-$C_{10}$ aryl, $C_7$-$C_{10}$ alkaryl, and $C_7$-$C_{10}$ aralkyl; preferably, two or more of $R_1$-$R_6$ are optionally bonded to each other to synthesize one or more condensed ring structures.

The solid catalyst component provided by the invention is characterized in that in the formula (1), $R_7$ and $R_8$ are the same or different, and each independently selected from the group consisting of $C_1$-$C_6$ straight chain alkyl, $C_3$-$C_{10}$ branched chain alkyl, $C_3$-$C_{10}$ cycloalkyl, $C_6$-$C_{10}$ aryl, $C_7$-$C_{10}$ alkaryl, and $C_7$-$C_{10}$ aralkyl.

According to the solid catalyst component provided by the invention, the diol ester compound is at least one selected from the group consisting of 1,3-propanediol dibenzoate, 2-methyl-1,3-propanediol dibenzoate, 2-ethyl-1,3-propanediol dibenzoate, 2,2-dimethyl-1,3-propanediol dibenzoate, 1,3-diphenyl-1,3-propanediol dibenzoate, 1,3-diphenyl-1,3-propanediol di-n-propionate, 1,3-diphenyl-2-methyl-1,3-propanediol dipropionate, 1,3-diphenyl-2-methyl-1,3-propanediol diacetate, 1,3-diphenyl-2,2-dimethyl-1,3-propanediol dibenzoate, 1,3-diphenyl-2,2-dimethyl-1,3-propanediol dipropionate, 1,3-di-t-butyl-2-ethyl-1,3-propanediol dibenzoate, 1,3-diphenyl-1,3-propanediol diacetate, 1,3-diisopropyl-1,3-propanol bis(4-butylbenzoic acid) ester, 1-phenyl-2-amino-1,3-propanediol dibenzoate, 1-phenyl-2-methyl-1,3-butanediol dibenzoate, 2,4-pentanediol dibenzoate, 3-butyl-2,4-pentanediol dibenzoate, 3,3-dimethyl-2,4-pentanediol dibenzoate, 2,4-pentanediol di(p-methylbenzoic acid) ester, 2,4-pentanediol di(p-tert-butylbenzoic acid) ester, 2,4-pentanediol di(p-butylbenzoic acid) ester, 2-methyl-1,3-pentanediol di(p-methylbenzoic acid) ester, 2-butyl-1,3-pentanediol di(p-methylbenzoic acid) ester, 2-methyl-1,3-pentanediol di(p-tert-butylbenzoic acid) ester, 2-methyl-1,3-pentanediol pivalate, 2,2-dimethyl-1,3-pentanediol dibenzoate, 2-ethyl-1,3-pentanediol dibenzoate, 2-butyl-1,3-pentanediol dibenzoate, 2-methyl-1,3-pentanediol dibenzoate, 2-ethyl-1,3-pentanediol dibenzoate, 2-propyl-1,3-pentanediol

dibenzoate, 2-butyl-1,3-pentanediol dibenzoate, 3-ethyl-3,5-heptanediol dibenzoate, 4-ethyl-3,5-heptanediol dibenzoate, 3-propyl-3,5-heptanediol dibenzoate, 4-propyl-3,5-heptanediol dibenzoate, 3-butyl-3,5-heptanediol dibenzoate, 2,3-dimethyl-3,5-heptanediol dibenzoate, 2,4-dimethyl-3,5-heptanediol dibenzoate, 2,5-dimethyl-3,5-heptanediol dibenzoate, 4,4-dimethyl-3,5-heptanediol dibenzoate, 4,5-dimethyl-3,5-heptanediol dibenzoate, 4,6-dimethyl-3,5-heptanediol dibenzoate, 6,6-dimethyl-3,5-heptanediol dibenzoate, 2-methyl-3-ethyl-3,5-heptanediol dibenzoate, 2-methyl-4-ethyl-3,5-heptanediol dibenzoate, 2-methyl-5-ethyl-3,5-heptanediol dibenzoate, 3-methyl-4-ethyl-3,5-heptanediol dibenzoate, 3-methyl-5-ethyl-3,5-heptanediol dibenzoate, 4-methyl-3-ethyl-3,5-heptanediol dibenzoate, and 4-methyl-4-ethyl-3,5-heptanediol dibenzoate.

In some preferred embodiments, the 1,3-diether compound has a chemical structure represented by formula (2):

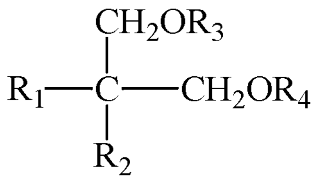

Formula (2)

In the formula (2), $R_1$ and $R_2$ are the same or different, each independently selected from hydrogen, $C_1$-$C_{20}$ straight chain alkyl, $C_3$-$C_{10}$ branched chain alkyl, $C_3$-$C_{20}$ cycloalkyl, $C_6$-$C_{20}$ aryl, $C_7$-$C_{20}$ alkaryl, and $C_7$-$C_{20}$ aralkyl; $R_3$ and $R_4$ are the same or different, and each independently selected from $C_1$-$C_{10}$ alkyl.

According to the solid catalyst component provided by the invention, in the formula (2), $R_1$ and $R_2$ are the same or different, each independently selected from hydrogen, $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{20}$ alkaryl, and $C_7$-$C_{10}$ aralkyl; $R_3$ and $R_4$ are the same or different, and each independently selected from $C_1$-$C_6$ alkyl.

According to the solid catalyst component provided by the invention, wherein the 1,3-diether compound is at least one selected from the group consisting of 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2,2-dicyclohexyl-1,3-dimethoxypropane, 2,2-dicyclopentyl-1,3-dimethoxypropane, 2,2-diethyl-1,3-dimethoxypropane, 2, 2-dipropyl-1, 3-dimethoxypropane, 2,2-diisopropyl-1,3-dimethoxypropane, 2,2-dibutyl-1,3-dimethoxypropane, 2-methyl-2-propyl-1,3-dimethoxypropane, 2-methyl-2-benzyl-1,3-dimethoxypropane, 2-methyl-2-ethyl-1,3-dimethoxypropane, 2-methyl-2-isopropyl-1,3-dimethoxypropane, 2-methyl-2-phenyl-1,3-dimethoxypropane, 2-methyl-2-cyclohexyl-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2-isobutyl-2-isopropyl-1,3-dimethoxypropane, 2-(1-methylbutyl)-2-isopropyl-1,3-dimethoxypropane, 2-isopropyl-2-isoamyl-1,3-dimethoxypropane, 2-phenyl-2-isopropyl-1,3-dimethoxypropane, 2-phenyl-2-sec-butyl-1,3-dimethoxypropane, 2-benzyl-2-isopropyl-1,3-dimethoxypropane, 2-cyclopentyl-2-isopropyl-1,3-dimethoxypropane, 2-cyclopentyl-2-sec-butyl-1,3-dimethoxypropane, 2-cyclohexyl-2-isopropyl-1,3-dimethoxypropane, 2-cyclohexyl-2-sec-butyl-1,3-dimethoxypropane, 2-isopropyl-2-sec-butyl-1,3-dimethoxypropane, 2-cyclohexyl-2-cyclohexylmethyl-1,3-dimethoxypropane, and 9,9-dimethoxy methyl fluorene.

According to the solid catalyst component provided by the invention, wherein a hydrogen atom on aryl group, alkaryl and/or a benzene ring of the aralkyl in formula (1) and formula (2) may be optionally substituted with a halogen atom.

According to the solid catalyst component provided by the invention, wherein the carboxylic ester is an aliphatic carboxylic ester and/or an aromatic carboxylic ester. In some embodiments, the carboxylic ester is at least one selected from the group consisting of mono-aliphatic carboxylic ester, binary aliphatic carboxylic ester, mono-aromatic carboxylic ester, and binary aromatic carboxylic ester, wherein the aliphatic carboxylic ester refers to the carboxylic ester prepared with mono- (or binary) aliphatic carboxylic acid and aliphatic monohydric alcohol or aromatic monohydric alcohol, the aromatic carboxylic ester refers to the carboxylic ester prepared by using mono- (or binary) aromatic carboxylic acid and aliphatic monohydric alcohol or aromatic monohydric alcohol. Preferably, the carboxylic ester is one or more selected from the group consisting of a benzoate compound, a phthalate compound, and a succinate compound.

In the invention, the benzoate compound may be one or more selected from the group consisting of methyl benzoate, ethyl benzoate, and n-butyl benzoate.

For example, the phthalate compound may be one or more selected from the group consisting of diethyl phthalate, diisobutyl phthalate, di-n-butyl phthalate, diisooctyl phthalate, and di-n-octyl phthalate.

For instance, the succinate compound may be one or more selected from the group consisting of diethyl 2,3-diisopropyl succinate, diisobutyl 2,3-diisopropyl succinate, di-n-butyl 2,3-diisopropyl succinate, dimethyl 2,3-diisopropyl succinate, diisobutyl 2,2-dimethyl succinate, diisobutyl 2-ethyl-2-methyl succinate, and diethyl 2-ethyl-2-methyl succinate.

According to the solid catalyst component provided by the invention, wherein the internal electron donor comprises an internal electron donor a and an internal electron donor b, the internal electron donor a and the internal electron donor b have two options:

Option I: the internal electron donor a is selected from the diol ester compound, and the internal electron donor b is selected from the 1,3-diether compound and an optional carboxylic ester;
Option II: the internal electron donor a is selected from the 1,3-diether compound, and the internal electron donor b is selected from the phosphate ester compound represented by formula (3);

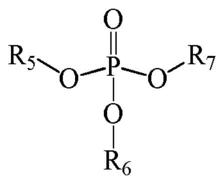

Formula (3)

In the formula (3), $R_5$, $R_6$, and $R_7$ are the same or different, each independently selected from $C_1$-$C_4$ straight chain alkyl, $C_3$-$C_4$ branched chain alkyl, $C_3$-$C_{20}$ cycloalkyl, $C_6$-$C_{20}$ aryl, $C_7$-$C_{20}$ alkaryl, and $C_7$-$C_{20}$ aralkyl.

The solid catalyst component provided by the invention is characterized in that in the formula (3), $R_5$, $R_6$, and $R_7$ are the same or different, each independently selected from $C_1$-$C_4$ straight chain alkyl, $C_3$-$C_4$ branched chain alkyl, $C_3$-$C_{10}$ cycloalkyl, $C_6$-$C_{10}$ aryl, $C_7$-$C_{10}$ alkaryl, and $C_7$-$C_{10}$ aralkyl.

According to the solid catalyst component provided by the invention, wherein the phosphate ester compound is at least one selected from the group consisting of trimethyl phosphate, triethyl phosphate, tributyl phosphate, triphenyl phosphate, tricresyl phosphate, triisopropylphenyl phosphate, phenyldimethyl phosphate, tolyldibutyl phosphate, dimethyl isopropylphenyl phosphate, diethyl isopropylphenyl phosphate, dibutyl isopropylphenyl phosphate, phenyl dimethylphenyl phosphate, phenyl diisopropylphenyl phosphate, p-tolyldibutyl phosphate, m-tolyldibutyl phosphate, p-isopropylphenyl dimethyl phosphate, p-isopropylphenyl diethyl phosphate, p-tert-butylphenyl dimethyl phosphate, and o-tolyl p-di-tert-butyl phenyl phosphate.

According to the solid catalyst component provided by the invention, wherein the internal electron donor includes an internal electron donor a and an internal electron b, the mass ratio of the internal electron donor a to the internal electron donor b may be (0.1-1,000): 1. For example, the mass ratio of the internal electron donor a to the internal electron donor b may be 0.1: 1, 0.2: 1, 0.5: 1, 0.8: 1, 1: 1, 2: 1, 5: 1, 10: 1, 20: 1, 30: 1, 40: 1, 50: 1, 80: 1, 100: 1, 200: 1, 500: 1, 800: 1, 1,000: 1 and the ranges consisting of the numerical values.

According to the solid catalyst component provided by the invention, wherein the solid catalyst component is a spherical solid particle.

Preferably, the solid catalyst component has an average particle diameter $D_{50}$ within the range of 5-150$\mu$m. For example, an average particle diameter $D_{50}$ of the solid catalyst component may be 5$\mu$m, 10$\mu$m, 20$\mu$m, 30$\mu$m, 40$\mu$m, 50$\mu$m, 60$\mu$m, 70$\mu$m, 80$\mu$m, 100$\mu$m, 120$\mu$m, 150$\mu$m, or a random value within the range consisting of any two numerical values. Specifically, the average particle diameter $D_{50}$ of the solid catalyst component may be within the range of 20-80$\mu$m.

In the invention, the average particle diameter $D_{50}$ is measured by using the Master Sizer 2000 laser particle analyzer (manufactured by Malvern Instruments Ltd.).

Preferably, the solid catalyst component has a particle size distribution value (SPAN) within the range of 0.75-0.85.

In the invention, the SPAN value is measured by a Masters Sizer 2000 particle size analyzer manufactured by Malvern Instruments Ltd. of the United Kingdom on a carrier, and n-hexane is used as a dispersion medium. Particle size distribution value Span = (D90-D10)/D50.

According to the solid catalyst component provided by the invention, the total weight of the solid catalyst component is the calculation basis, the solid catalyst component has a poly($\alpha$-olefin) content of 0.1-89 wt%, preferably 1-50 wt%, more preferably 9-35 wt%, a titanium content of 0.1-3.5 wt%, preferably 0.5-2.5 wt%, more preferably 1.5-2.5 wt%, a magnesium content of 1-18 wt%, preferably 11-17 wt%, a halogen content of 2-65 wt%, preferably 35-55 wt%, and an internal electron donor content of 0.6-15 wt%, preferably 1-10 wt%, more preferably 6-10 wt%.

In the present invention, the halogen is one or more selected from the group consisting of fluorine, chlorine, bromine, and iodine, preferably chlorine.

According to the solid catalyst component provided by the invention, the magnesium and/or halogen source can be a carrier, and the carrier is preferably an alkoxy magnesium carrier, a magnesium chloride alcoholate spherical carrier, or a spherical magnesium compound carrier. The kinds of carriers are described in the second aspect.

According to the solid catalyst component provided by the invention, the titanium and/or halogen source can be

titanium halide (such as titanium tetrachloride). Wherein the titanium halide is the same as described in the second aspect.

According to the solid catalyst component provided by the invention, the titanium content can be measured according to a colorimetric method. Specifically, weighting 0.2-0.5g of a sample, dissolving the sample with 50mL of 2N $H_2SO_4$, filtering the upper layer of drift, extracting a clear liquid, and waiting for the color comparison; using 2N $H_2SO_4$ solution as a blank, measuring the absorbance E1 of the blank with a cuvette having a thickness of 1cm at the wavelength of 410μm, then dripping 1 drop of 30% $H_2O_2$, shaking up, measuring the absorbance E2 of the sample with the cuvette, and the titanium content Ti (%) is calculated based on the following formula:

$$Ti\%=[(E2 - E1)\times 100)/(K\cdot L\cdot W\cdot 100)]\times 100$$

In the formula: W denotes the weight of a sample (g); L denotes the cuvette thickness (cm); K denotes the specific extinction coefficient; E1 denotes the blank absorbance; E2 denotes the sample absorbance.

The magnesium content may be determined through the Ethylene Diamine Tetraacetic Acid (EDTA) titration method. Specifically, 0.2-0.5g of a sample is placed in a 250mL Erlenmeyer flask, dissolved by adding 20-30mL of 2N $H_2SO_4$ solution, 20mL of triethanolamine (1 + 2) standard solution is added, NaOH solution having a concentration of 20% is used for adjusting pH =10, the Erlenmeyer flask is shook, then added with 10mL of a buffer solution having pH =10, 6 drops of $H_2O_2$ with a concentration of 30% and 30-50mL of distilled water are further added, a small amount of chrome Black T indicator is added, the solution is shook to form a uniform solution, titrated with 0.02N EDTA solution to the end point that the solution color changes from purple-red to blue (disappearance of violet), the magnesium content Mg (%) is calculated according to the following formula:

$$Mg\ (\%)=[(VE\cdot NE\times 24.31)/(G\cdot 1000)]\times 100$$

In the formula: G denotes the sample mass (g); VE denotes the amount of consumed EDTA (mL); NE denotes the equivalent number of EDTA solution; 24.31 is the atomic weight of magnesium (Mg).

The chlorine content can be measured through the silver nitrate titration method. Specifically, 0.04-0.1g of a sample is weighed and placed in an Erlenmeyer flask, 20mL of 2N $H_2SO_4$ solution is added, and the Erlenmeyer flask is standing still for 30 minutes; after washing with distilled water many times, 20-30mL of 0.1N $AgNO_3$ solution is dropwise added, 3mL of 1:1 $HNO_3$ solution is added, excess $AgNO_3$ solution is titrated with 0.1N $NH_4CNS$ standard solution until an end point that the brick red color does not disappear for two seconds, and the chlorine content Cl (%) is calculated according to the following formula:

$$Cl(\%)=[(V_1-V_2\times D)\times N_1\times 35.45/G\cdot 1000)]\times 100$$

In the formula: $V_1$ denotes an amount of $AgNO_3$ solution (mL); $V_2$ denotes an amount of consumed $NH_4CNS$ solution (mL); D denotes the volume ratio of $AgNO_3$ solution/$NH_4CNS$ solution; $N_1$ denotes an equivalent concentration of $AgNO_3$; G denotes the mass of a sample (g); 35.45 is the atomic weight of chlorine (Cl).

The test method for the poly (α-olefin) content in the solid catalyst component comprises the following steps: weighing a certain amount (M1) of a sample, dissolving the sample in ethanol and dilute hydrochloric acid, drying the insoluble matter under vacuum at 80°C to obtain a solid matter (M2), taking 0.2g of the solid matter for tableting, measuring the poly(α-olefin) content (C1) of the solid matter by an infrared spectrometer, the mass percent of the poly(α-olefin) in the solid catalyst component is calculated based on the following formula:

$$C_A = M2\times C1/M1$$

$C_A$ denotes the mass percent of poly(α-olefin) in the solid catalyst component, M1 and M2 denote the mass (g) of the sample and the dry solid matter, respectively, and C1 denotes the mass percent of poly(α-olefin) in the dry solid matter.

The test method for the content of an internal electron donor in the solid catalyst component comprises the following steps: dissolving a sample with ethyl acetate and hydrochloric acid solution (with a concentration of 2 mol/L), obtaining an internal electron donor by extraction, and analyzing the content of internal electron donor using a conventional liquid chromatograph.

According to the solid catalyst component provided by the invention, the solid catalyst component further comprises alkylaluminum and an external electron donor. The type and amount of the alkylaluminum and the external

electron donor can be selected with reference to the existing olefin prepolymerization catalyst. The well-known polymerization process in the field may cause a small amount of residual alkylaluminum and external electron donor, the contents of alkylaluminum and external electron donor generally refer to the residual amounts of alkylaluminum and external electron donor in polyolefin; the types of the alkylaluminum and the external electron donor are as described in the second aspect.

In addition, the solid catalyst component of the invention may comprise other components (e.g., inert solvents) in addition to the aforementioned components, such as inert solvents added during the preparation process of the solid catalyst component as described in the second aspect.

According to the second aspect, the present invention provides a method for preparing a solid catalyst component for olefin polymerization, the method comprises the following steps:

(1) Contacting a catalyst component A, alkylaluminum, and an external electron donor in the presence of an inert solvent to carry out a reaction; the catalyst component A contains titanium, magnesium, halogen, and an internal electron donor;

(2) Mixing the reaction system obtained in step (1) with α-olefin to carry out a polymerization reaction;

(3) Removing the unreacted α-olefin in step (2), and adding hydrogen gas into the obtained reaction system for carrying out a reaction.

In the invention, the catalyst component A represents a catalyst that is not pre-polymerized, and the solid catalyst component represents a pre-polymerized catalyst.

According to the preparation method provided by the invention, in step (1), the alkylaluminum and the external electron donor compound can be selected by referring to the existing olefin prepolymerization catalyst, which is not particularly limited in the invention. The alkylaluminum contains 1-3 alkyl groups, the alkyl group is $C_1$-$C_8$ alkyl, and typically, the alkylaluminum may be one or more selected from the group consisting of triethyl aluminum, triisobutyl aluminum, tri-n-butyl aluminum, tri-n-hexyl aluminum, and diethyl aluminum chloride. The external electron donor compound may be at least one selected from silicon-containing compounds, and the external electron donor compound may be one or more selected from the group consisting of cyclohexyl methyl dimethoxy silane, diisopropyl dimethoxy silane, n-butyl dimethoxy silane, diisobutyl dimethoxy silane, diphenyl dimethoxy silane, methyl-t-butyl dimethoxy silane, and dicyclopentyl dimethoxy silane.

Generally, the molar ratio of dosage of the alkylaluminum, the external electron donor compound, and the catalyst component A calculated in terms of titanium may be (1-50): (0.2-10): 1. For example, the molar ratio of dosage of the alkylaluminum, the external electron donor compound, and the catalyst component A calculated in terms of titanium may be 1: 0.2: 1, 5: 0.2: 1, 10: 0.2: 1, 15: 0.2: 1, 20: 0.2: 1, 30: 0.2: 1, 40: 0.2: 1, 50: 0.2: 1, 15: 0.3: 1, 15: 0.5: 1, 15: 1: 1, 15: 2: 1, 15: 3: 1, 15: 4: 1, 15: 5: 1, 15: 20: 1, or the range consisting of any two numerical values of the alkylaluminum and the external electron donor compound in the aforementioned ratios.

According to the preparation method provided by the invention, in step (1), relative to 25g of the catalyst component A, the alkylaluminum is used in an amount of 1-30mmol, preferably 15-20mmol; the external electron donor compound is used in an amount of 0.01-10mmol, preferably 0.1-1mmol.

According to the preparation method provided by the invention, the internal electron donor comprises at least one of diol ester compound, 1,3-diether compound, and carboxylic ester. The internal electron donor is as described in the first aspect, the content will not be repeatedly described herein.

According to the preparation method provided by the invention, the inert solvent in step (1) may be selected according to the prior art. Generally, the inert solvent may be one or more selected from the group consisting of hexane, heptane, and decane. The inert solvent is added in such an amount that the mass concentration of the catalyst component A in the inert solvent may be within the range of 5-50 g/L.

According to the preparation method provided by the invention, the reaction conditions in step (1) may comprise a temperature of 0-30°C, preferably 15-25°C; and a time of 1-30min, preferably 10-20min.

According to the preparation method provided by the invention, the polymerization reaction conditions in step (2) may comprise a temperature of 0-50°C, preferably 15-25°C; and a time of 5-30min, preferably 10-20min.

According to the preparation method provided by the invention, the reaction conditions in step (3) may comprise a temperature of 0-50°C, preferably 15-25°C; and a time of 5-30min, preferably 10-20min.

According to the preparation method provided by the invention, wherein the mode of removing the unreacted α-olefin in step (2) may be a conventional mode in the art, for example, initially venting the unreacted α-olefin, and then replacing the residual α-olefin with an inactive gas. Namely, step (3) comprises the following operations: initially venting the unreacted α-olefin in step (2), and then replacing the residual α-olefin with an inactive gas, subsequently adding hydrogen gas into the obtained reaction system for carrying out a reaction.

Unless otherwise specified in the present invention, before carrying out the prepolymerization reaction in the second aspect or the olefin polymerization reaction in the sixth aspect, the reaction vessel is initially replaced with an inert

gas such that the reaction vessel is in an inert atmosphere, the raw materials are subsequently added into the reaction vessel. It is well-known among those skilled in the art.

In the invention, the inactive gas may be at least one of nitrogen gas, neon gas, argon gas, and krypton gas. The number of substitutions with the inactive gas is not particularly limited, it may be conventionally selected in the art, for example, substitution for 1-5 times.

According to the production method provided by the present invention, wherein the addition amount of hydrogen gas is controlled to maintain the reaction pressure within the range of 0.01-1MPa, preferably 0.1-0.5MPa, more preferably 0.2-0.3 MPa. Unless otherwise specified in the present invention, the pressure is usually a gauge pressure.

According to the preparation method provided by the invention, wherein hydrogen gas can be added in the form of pure hydrogen gas or a hydrogen-containing mixed gas. The hydrogen-containing mixed gas may be composed of hydrogen gas and an inert gas, and the inert gas may be at least one selected from nitrogen gas, helium gas, neon gas, and argon gas. The invention has no special requirements for the concentration of hydrogen gas in the hydrogen-containing gas mixture, as long as the defined reaction pressure can be achieved. In general, the concentration of hydrogen gas in the hydrogen-containing gas mixture may be within the range of 0.1-100 vol.%, for example, 20-100 vol.%.

According to the preparation method provided by the invention, step (3) further comprises a post-treatment step: carrying out a solid-liquid separation and drying treatment on the system obtained in step (3) to obtain the solid catalyst component. The post-treatment step generally comprises: removing unreacted hydrogen gas, filtering to remove liquid, or optionally washing with hexane 1-2 times to obtain a solid product; then drying the solid product under vacuum at 10-80°C to prepare the solid catalyst component. In the invention, the vacuum drying may be carried out by a conventional vacuum pump, and the invention has no particular requirement for the vacuum pump.

The preparation method provided by the invention is characterized in that the $\alpha$-olefin is selected from $C_2$-$C_{10}$ olefin, preferably one or more selected from the group consisting of ethylene, propylene, butylene, octane, and isoamylene, the $\alpha$-olefin is more preferably propylene.

According to the preparation method provided by the invention, the mass ratio of the $\alpha$-olefin to the catalyst component A may be (0.04-10): 1. For example, the mass ratio of the $\alpha$-olefin to the catalyst component A may be 0.04: 1, 0.05: 1, 0.08: 1, 0.1: 1, 0.2: 1, 0.3: 1, 0.4: 1, 0.5: 1, 0.6: 1, 0.7: 1, 0.8: 1, 0.9: 1, 1: 1, 2: 1, 3: 1, 4: 1, 5: 1, 6: 1, 7: 1, 8: 1, 9: 1, 10: 1, or a range of consisting of any two numerical values.

According to the preparation method provided by the invention, wherein the catalyst component A can be prepared according to the conventional method of main catalyst in the field of olefin polymerization catalyst, the present invention is not particularly limited thereto, for example, the catalyst component A can be prepared by referring to the methods disclosed in patent applications WO2012034357a1, WO2012097680a1 and patents ZL03153152.0, ZL200410062291.3, ZL201310491641.7, ZL201310491393.6, and ZL 201310491648.9.

In the invention, the catalyst component A is or may comprise a reaction product of titanium halide (e.g. titanium tetrachloride), a carrier, and an internal electron donor, the carrier is preferably an alkoxy magnesium carrier, a magnesium chloride alcoholate spherical carrier, or a spherical magnesium compound carrier.

In the present invention, the average particle diameter of the carrier is within the range of 5-150$\mu$m, preferably within the range of 20-80$\mu$m, more preferably within the range of 30-60$\mu$m.

In some embodiments, the catalyst component A may be prepared with reference to the methods disclosed in patents WO2012034357A1 and WO2012097680A1. More specifically, the carrier is an alkoxy magnesium carrier, and the catalyst component A is a reaction product of titanium halide (e.g., titanium tetrachloride), an alkoxy magnesium carrier, and the internal electron donor in an inert solvent. The alkoxy magnesium carrier is represented by a general formula $Mg(OEt)_{2-k-l}(OEH)_k(OiPr)_l$, wherein Et is ethyl, EH is 2-ethylhexyl, iPr is isopropyl, both k and 1 are each independently within the range of 0-0.5.

The catalyst component A can be prepared through the following step: reacting alkoxy magnesium with titanium halide (e.g., titanium tetrachloride) and the internal electron donor (e.g., carboxylic ester) in the presence of an inert solvent. The reaction temperature is generally from -40°C to 200°C, preferably from -20°C to 150°C; the reaction time is usually within the range from 1 minute to 20 hours, preferably from 5 minutes to 8 hours. The solid obtained from said reaction is washed with an inert solvent (preferably toluene) to obtain a solid catalyst component. The washing is generally carried out for 1-24 hours, preferably 6-10 hours.

The solid catalyst component can be stored in a dry state or an inert solvent.

In other embodiments, the catalyst component A may be prepared with reference to the methods disclosed in patents ZL03153152.0 and ZL 200410062291.3. More specifically, the carrier is a magnesium chloride alcoholate spherical carrier, and the catalyst component A is the reaction product of titanium halide (e.g., titanium tetrachloride), a spherical magnesium chloride alcoholate, and the internal electron donor (e.g., carboxylic ester).

The general formula of the spherical magnesium chloride alcoholate may be $Mg(R'OH)_i(H_2O)_j$, wherein R' is methyl, ethyl, n-propyl, or isopropyl, i is within the range of 1.5-3.5, and j is within the range of 0-0.1.

The catalyst component A is prepared with a method comprising the following steps:

1) Reacting a titanium halide (e.g., titanium tetrachloride) with the magnesium chloride alcoholate spherical carrier at a temperature from -20°C to 0°C for 20-120min to obtain a mixture I;
2) Heating the mixture I to a temperature of 100-120°C, adding an internal electron donor (e.g., carboxylic ester) in the heating process, and carrying out a reaction at 100-120°C for 20-200min to obtain a solid product II;
3) Washing the solid product II with titanium halide (e.g., titanium tetrachloride) and hexane respectively, and then drying the solid product II under vacuum.

In still other embodiments, the catalyst component A may be prepared with reference to the methods disclosed in patents ZL201310491641.7, ZL201310491393.6, and ZL201310491648.9. More specifically, the carrier is a spherical magnesium compound carrier, and the catalyst component A is a reaction product of titanium halide (e.g., titanium tetrachloride), a spherical magnesium compound carrier, and the internal electron donor (e.g., carboxylic ester).

The spherical magnesium compound carrier is represented by formula (4):

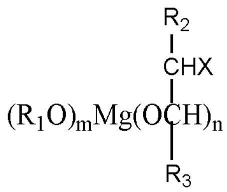

Formula (4)

In the formula (4), R1 is $C_1$-$C_{12}$ straight chain or branched chain alkyl; $R_2$ and $R_3$ are the same or different, each is hydrogen or $C_1$-$C_5$ straight chain or branched chain alkyl, wherein the hydrogen atom on the alkyl group is optionally substituted by a halogen atom; X is halogen; m is within the range of 0.1-1.9; n is within the range of 0.1-1.9; m+n=2.

The catalyst component A is prepared with a method comprising the following steps:

1) Reacting a titanium halide (e.g., titanium tetrachloride) with the spherical magnesium compound carrier at a temperature from -20°C to 0°C for 20-120min to obtain a mixture I;
2) Heating the mixture I to a temperature of 100-120°C, adding an internal electron donor (e.g., carboxylic ester) in the heating process, and carrying out a reaction at 100-120°C for 20-200min to obtain a solid product II;
3) Washing the solid product II with titanium halide (e.g., titanium tetrachloride) and hexane respectively, and then drying the solid product II under vacuum.

According to the preparation method provided by the invention, the vacuum drying conditions in the aforementioned operation comprise a temperature of 40-50°C and a time of 30-60min. In the invention, the vacuum drying may be carried out by a conventional vacuum pump, and the invention has no particular requirement for the vacuum pump.

According to the third aspect, the invention provides the solid catalyst component prepared with the method according to the second aspect of the invention.

According to a fourth aspect, the invention provides a catalyst system for olefin polymerization, the catalyst system comprises the solid catalyst component according to the invention, alkylaluminum, and an optional external electron donor compound or a reaction product thereof.

According to the catalyst system provided by the invention, wherein the alkylaluminum, the external electron donor compound, and the respective contents can be selected according to the prior art. In the invention, the types of the alkylaluminum and the external electron donor compound used in the catalyst system may be the same as or different from those used in the preparation process of the solid catalyst component. For example, the types of the alkylaluminum and external electron donor compounds described in the second aspect of the invention can be adopted.

Generally, the alkylaluminum may be one or more selected from the group consisting of triethylaluminum, triisobutylaluminum, tri-n-butylaluminum, tri-n-hexylaluminum, and diethylaluminum monochloride.

The ratio of the molar weight of the alkylaluminum calculated in terms of an aluminum element to the molar weight of the solid catalyst component calculated in terms of titanium may be (1-1,000):1. For example, the ratio of the molar amount of the alkylaluminum calculated in terms of an aluminum element to the molar amount of the solid catalyst component calculated in terms of titanium may be 1: 1, 2: 1, 5: 1, 10: 1, 20: 1, 50: 1, 100: 1, 200: 1, 500: 1, 1,000: 1, or a range consisting of any two numerical values.

According to the catalyst system provided by the invention, wherein the content of alkylaluminum is 0.01-100mmol, preferably 0.1-10mmol, and more preferably 1-5mmol, relative to per 15mg of the solid catalyst component.

Generally, the external electron donor compound may be at least one selected from the group consisting of cyclohexyl methyl dimethoxy silane, diisopropyl dimethoxy silane, di-n-butyl dimethoxy silane, diisobutyl dimethoxy

silane, diphenyl dimethoxy silane, methyl-t-butyl dimethoxy silane, dicyclopentyl dimethoxy silane, cyclo hexyl trimethoxy silane, t-butyl trimethoxy silane, and t-hexyl trimethoxy silane.

The ratio of the molar weight of the alkylaluminum calculated in terms of an aluminum element to the molar weight of the external electron donor compound calculated in terms of silicon element is (2-1,000): 1. For example, the ratio of the molar weight of the alkylaluminum calculated in terms of an aluminum element to the molar weight of the external electron donor compound calculated in terms of silicon element may be 2: 1, 5: 1, 10: 1, 20: 1, 50: 1, 100: 1, 200: 1, 500: 1, 1,000: 1, or a range consisting of any two numerical values.

In the fifth aspect, the present invention provides a use of the aforementioned solid catalyst component and/or the solid catalyst component prepared with the aforementioned method and/or the aforementioned catalyst system in the olefin polymerization.

In the sixth aspect, the present invention provides a method of olefin polymerization, the method comprises: subjecting the olefins to the polymerization reaction in the presence of the aforementioned solid catalyst component, and/or the solid catalyst component prepared with the aforementioned method, and/or the aforementioned catalyst system.

According to the method provided by the invention, wherein the olefins are represented by the general formula $CH_2$=CHR, R is hydrogen, or $C_1$-$C_6$ alkyl, or $C_6$-$C_{10}$ aryl. Preferably, the olefin is one or more selected from the group consisting of ethylene, propylene, butene, pentene, and hexene.

According to the method provided by the invention, wherein the polymerization reaction conditions may be conventionally selected in the art, for example, the reaction temperature is within the range of 0-150°C, the reaction temperature is preferably within the range of 60-90°C, and the reaction pressure is atmospheric pressure or higher.

In the seventh aspect, the present invention provides a use of the aforementioned solid catalyst component and/or the solid catalyst component prepared with the aforementioned method in reducing the olefin polymerization activity.

The advantages of the technical scheme of the present invention will be described in detail below with reference to the specific embodiments.

In the following examples and comparative examples,
The isotactic index of the polymer (polypropylene) indicated the mass percent of the polymer which was insoluble in boiling n-heptane under specified conditions, the isotactic index was measured by using a heptane extraction method (boiling extraction by heptane for 6 hours), namely 2g of dried polymer sample was taken and placed in an extractor to be extracted by boiling heptane for 6 hours, the residue was then dried to a constant weight, the ratio of the mass (g) of the obtained polymer to 2 was the isotactic index.

The polymer melt index was determined according to the method stipulated in ASTM D1238-99.

The polymer particle size distribution was calculated as the mass percent of the fraction through screening with a standard sieve.

The measurement methods of specific surface area, pore diameter, and pore volume were as follows: the experiments were performed by testing the carrier with an AutoChem 2920 full-automatic chemical adsorption instrument manufactured by MICROMERISTICS CORPORATION in the United States of America (USA), the specific surface area was measured with the BET method, the pore volume was tested with the BJH method.

The testing method of the XRD spectrogram was as follows: the experiments were performed by testing the carrier with a Bruker AXS, D8 Advance X-ray diffractometer manufactured by Bruker Corporation in Switzerland, under the following test conditions: CuK$\alpha$ ($\lambda$=1.5406), a tube pressure of 40 KV, a tube current of 40 mA, slit system DS=SS=1°, acceptance slit 0.3 mm, the monochromator was a graphite monochromator, a scintillation counter was used for counting, scan speed 2$\theta$=3°/min, scan range 2$\theta$=5°-75°.

Unless otherwise specified in the following embodiments, the "vacuum" denoted a vacuum degree achieved by a conventional vacuum pump.

The following preparation examples served to illustrate the preparation method of the catalyst component A.

In the following preparation examples, the structural formula of the spherical magnesium compound carrier was as follows:

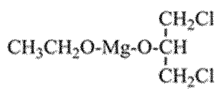

Preparation Example 1

1.2L of titanium tetrachloride was added into a 3L glass reaction flask equipped with a stirrer and cooled to -20°C, 100g of magnesium chloride alcoholate spherical carrier [$Mg(C_2H_5OH)_{2.6}$] (average particle diameter D50=45$\mu$m) was added under the stirring condition, the reaction was performed at -20°C for 0.5 hour, the temperature was then slowly

raised to 120°C, 15g of 2,4-pentanediol dibenzoate was added during the temperature rise process, the reaction was subsequently implemented at 120°C for 0.5 hour, the liquid was filtered out, 1L of titanium tetrachloride was added, the temperature was maintained at 120°C for 2 hours, the liquid was then filtered to obtain a solid product, the obtained solid product was washed with hexane 5 times and finally dried under vacuum at 45°C to prepare a catalyst component A (average particle diameter D50=40μm, SPAN value=0.79) which was denoted as A-1.

Preparation Example 2

1.2L of titanium tetrachloride was added into a 3L glass reaction flask equipped with a stirrer and cooled to -20°C, 100g of magnesium chloride alcoholate spherical carrier [$Mg(C_2H_5OH)_{2.6}$] (average particle diameter D50=45μm) was added under the stirring condition, the reaction was performed at -20°C for 0.5 hour, the temperature was then slowly raised to 120°C, 15g of 2,4-pentanediol dibenzoate and 15g of 2-isopropyl-2-isopentyl-1,3-dimethoxypropane were added during the temperature rise process, the reaction was subsequently implemented at 120°C for 0.5 hour, the liquid was filtered off, 1L of titanium tetrachloride was added, the temperature was maintained at 120°C for 1 hour, the liquid was then filtered to obtain a solid product, the obtained solid product was washed with hexane for 5 times and finally dried under vacuum at 45°C to prepare a catalyst component A (average particle diameter D50=41μm, SPAN value=0.78) which was denoted as A-2.

Preparation Example 3

100g of diethoxymagnesium carrier (average particle diameter D50=47μm), 500ml of toluene, and 20.0ml of 4-ethyl-3,5-heptanediol dibenzoate were taken to prepare a suspension liquid. 100ml of toluene and 900ml of titanium tetrachloride were added into a reaction kettle with a volume of 3,000ml repeatedly replaced by high-purity nitrogen gas, the temperature was raised to 80°C, the prepared suspension liquid was then added into the kettle, the constant temperature was kept for 1 hour, the temperature was further raised to 115°C, the constant temperature was maintained for 2 hours, the liquid was subjected to filter pressing and removed completely. A mixed liquor of 1,200ml of toluene and 300ml of titanium tetrachloride was subsequently added, the mixed liquor was heated to 110°C and stirred for 1 hour, the treatment was performed in such a way 3 times, the liquid was filtered to obtain a solid, the obtained solid was washed with 1,500ml of hexane for 4 times, the liquid was filtered, the solid was dried to prepare a catalyst component A (average particle diameter D50=42μm, SPAN value=0.82) which was denoted as A-3.

Preparation Example 4

100g of diethoxymagnesium carrier (average particle diameter D50=47μm), 500ml of toluene, 20.0ml of 4-ethyl-3,5-heptanediol dibenzoate, and 20.0ml of 2-isopropyl-2-isopentyl-1,3-dimethoxypropane were taken to prepare a suspension liquid. 100ml of toluene and 900ml of titanium tetrachloride were added into a reaction kettle with a volume of 3,000ml repeatedly replaced by high-purity nitrogen gas, the temperature was raised to 80°C, the prepared suspension liquid was then added into the kettle, the constant temperature was kept for 1 hour, the temperature was further raised to 115°C, the constant temperature was maintained for 2 hours, the liquid was subjected to filter pressing and removed completely. A mixed liquor of 1,200ml of toluene and 300ml of titanium tetrachloride was subsequently added, the mixed liquor was heated to 110°C and stirred for 1 hour, the treatment was performed in such a way 3 times, the liquid was filtered to obtain a solid, the obtained solid was washed with 1,500ml of hexane for 4 times, the liquid was filtered, the solid was dried to prepare a catalyst component A (average particle diameter D50=42μm, SPAN value=0.82) which was denoted as A-4.

Preparation Example 5

1.2L of titanium tetrachloride was added into a 3L glass reaction flask equipped with a stirrer and cooled to -20°C, 100g of spherical magnesium compound carrier (average particle diameter D50=45μm) was added under the stirring condition, and the reaction was performed at -20°C for 0.5 hour, the temperature was then slowly raised to 120°C, 15g of 2,4-pentanediol dibenzoate was added during the temperature rise process, the reaction was subsequently implemented at 120°C for 0.5 hour, the liquid was filtered out, 1L of titanium tetrachloride was added, the temperature was maintained at 120°C for 2 hours, the liquid was then filtered to obtain a solid product, the obtained solid product was washed with hexane 5 times and finally dried under vacuum to prepare a catalyst component A (average particle diameter D50=40μm, SPAN value=0.76) which was denoted as A-5.

Preparation Example 6

1.2L of titanium tetrachloride was added into a 3L glass reaction flask equipped with a stirrer and cooled to -20°C, 100g of spherical magnesium compound carrier (average particle diameter D50=45μm) was added under the stirring condition, and the reaction was performed at -20°C for 0.5 hour, the temperature was then slowly raised to 120°C, 15g of 2,4-pentanediol dibenzoate and 15g of 2-isopropyl-2-isopentyl-1,3-dimethoxypropane were added during the temperature rise process, the reaction was subsequently implemented at 120°C for 0.5 hour, the liquid was filtered off, 1L of titanium tetrachloride was added, the temperature was maintained at 120°C for 1 hour, the liquid was then filtered to obtain a solid product, the obtained solid product was washed with hexane for 5 times and finally dried under vacuum at 45°C to prepare a catalyst component A (average particle diameter D50=41μm, SPAN value=0.76) which was denoted as A-6.

Preparation Example 7

1.2L of titanium tetrachloride was added into a 3L glass reaction flask equipped with a stirrer and cooled to -20°C, 100g of magnesium chloride alcoholate spherical carrier $[Mg(C_2H_5OH)_{2.6}]$ (average particle diameter D50=45μm) was added under the stirring condition, the reaction was performed at -20°C for 0.5 hour, the temperature was then slowly raised to 120°C, 15g of 2-isopropyl-2-isopentyl-1,3-dimethoxypropane was added during the temperature rise process, the reaction was subsequently implemented at 120°C for 0.5 hour, the liquid was filtered off, 1L of titanium tetrachloride was added, the temperature was maintained at 120°C for 2 hours, the liquid was then filtered to obtain a solid product, the obtained solid product was washed with hexane for 5 times and finally dried under vacuum at 45°C to prepare a catalyst component A (average particle diameter D50=40μm, SPAN value=0.79) which was denoted as A-7.

Preparation Example 8

1.1L of titanium tetrachloride was added into a 3L glass reaction flask equipped with a stirrer and cooled to -20°C, 100g of magnesium chloride alcoholate spherical carrier $[Mg(C_2H_5OH)_{2.6}]$ (average particle diameter D50=45μm) was added under the stirring condition, the reaction was performed at -20°C for 0.5 hour, the temperature was then slowly raised to 120°C, 15g of 2-isopropyl-2-isopentyl-1,3-dimethoxypropane and 0.6g of tributyl phosphate were added during the temperature rise process, the reaction was subsequently implemented at 120°C for 0.5 hour, the liquid was filtered off, 1L of titanium tetrachloride was added, the temperature was maintained at 120°C for 2 hours, the liquid was then filtered to obtain a solid product, the obtained solid product was washed with hexane for 5 times and finally dried under vacuum at 45°C to prepare a catalyst component A (average particle diameter D50=40μm, SPAN value=0.79) which was denoted as A-8.

Preparation Example 9

100g of diethoxymagnesium carrier (average particle diameter D50=47μm), 500ml of toluene, and 20.0ml of 2-isopropyl-2-isopentyl-1,3-dimethoxypropane were taken to prepare a suspension liquid. 100ml of toluene and 900ml of titanium tetrachloride were added into a reaction kettle with a volume of 3,000ml repeatedly replaced by high-purity nitrogen gas, the temperature was raised to 80°C, the prepared suspension liquid was then added into the kettle, the constant temperature was kept for 1 hour, the temperature was further raised to 115°C, the constant temperature was maintained for 2 hours, the liquid was subjected to filter pressing and removed completely. A mixed liquor of 1,200ml of toluene and 300ml of titanium tetrachloride was subsequently added, the mixed liquor was heated to 110°C and stirred for 1 hour, the treatment was performed in such a way 3 times, the liquid was filtered to obtain a solid, the obtained solid was washed with 1,500ml of hexane for 4 times, the liquid was filtered, the solid was dried to prepare a catalyst component A (average particle diameter D50=42μm, SPAN value=0.82) which was denoted as A-9.

Preparation Example 10

100g of diethoxymagnesium carrier (average particle diameter D50=47μm), 500ml of toluene, and 20.0ml of 2-isopropyl-2-isopentyl-1,3-dimethoxypropane were taken to prepare a suspension liquid. 100ml of toluene and 900ml of titanium tetrachloride were added into a reaction kettle with a volume of 3,000ml repeatedly replaced by high-purity nitrogen gas, the temperature was raised to 80°C, the prepared suspension liquid was then added into the kettle, the constant temperature was kept for 1 hour, the temperature was further raised to 115°C, the constant temperature was maintained for 2 hours, the liquid was subjected to filter pressing and removed completely. A mixed liquor of 1,200ml of toluene and 300ml of titanium tetrachloride was subsequently added, the mixed liquor was heated to 110°C and stirred for 1 hour, the treatment was performed in such a way 3 times, the liquid was filtered to obtain a solid, the obtained solid was washed with 1,500ml of hexane for 4 times, the liquid was filtered, the solid was dried to prepare a catalyst component A

(average particle diameter D50=42μm, SPAN value=0.82) which was denoted as A-10.

Preparation Example 11

1.2L of titanium tetrachloride was added into a 3L glass reaction flask equipped with a stirrer and cooled to -20°C, 100g of spherical magnesium compound carrier (average particle diameter D50=45μm) was added under the stirring condition, and the reaction was performed at -20°C for 0.5 hour, the temperature was then slowly raised to 120°C, 15g of 2-isopropyl-2-isopentyl-1,3-dimethoxypropane was added during the temperature rise process, the reaction was subsequently implemented at 120°C for 0.5 hour, the liquid was filtered off, 1L of titanium tetrachloride was added, the temperature was maintained at 120°C for 2 hours, the liquid was then filtered to obtain a solid product, the obtained solid product was washed with hexane for 5 times and finally dried under vacuum at 45°C to prepare a catalyst component A (average particle diameter D50=40μm, SPAN value=0.76) which was denoted as A-11.

Preparation Example 12

1.1L of titanium tetrachloride was added into a 3L glass reaction flask equipped with a stirrer and cooled to -20°C, 100g of spherical magnesium compound carrier (average particle diameter D50=45μm) was added under the stirring condition, and the reaction was performed at -20°C for 0.5 hour, the temperature was then slowly raised to 120°C, 15g of 2-isopropyl-2-isopentyl-1,3-dimethoxypropane and 0.6g of tributyl phosphate were added during the temperature rise process, the reaction was subsequently implemented at 120°C for 0.5 hour, the liquid was filtered off, 1L of titanium tetrachloride was added, the temperature was maintained at 120°C for 2 hours, the liquid was then filtered to obtain a solid product, the obtained solid product was washed with hexane for 5 times and finally dried under vacuum at 45°C to prepare a catalyst component A (average particle diameter D50=40μm, SPAN value=0.76) which was denoted as A-12.

Preparation Example 13

1.2L of titanium tetrachloride was added into a 3L glass reaction flask equipped with a stirrer and cooled to -20°C, 100g of magnesium chloride alcoholate spherical carrier [$Mg(C_2H_5OH)_{2.6}$] (average particle diameter D50=45μm) was added under the stirring condition, the reaction was performed at -20°C for 0.5 hour, the temperature was then slowly raised to 120°C, 15g of diisobutyl phthalate was added during the temperature rise process, the reaction was subsequently implemented at 120°C for 0.5 hour, the liquid was filtered off, 1L of titanium tetrachloride was added, the temperature was maintained at 120°C for 2 hours, the liquid was then filtered to obtain a solid product, the obtained solid product was washed with hexane for 5 times and finally dried under vacuum to prepare a catalyst component A (average particle diameter D50=40μm, SPAN value=0.79) which was denoted as A-13.

Preparation Example 14

1.2L of titanium tetrachloride was added into a 3L glass reaction flask equipped with a stirrer and cooled to -20°C, 100g of magnesium chloride alcoholate spherical carrier [$Mg(C_2H_5OH)_{2.6}$] (average particle diameter D50=45μm) was added under the stirring condition, the reaction was performed at -20°C for 0.5 hour, the temperature was then slowly raised to 120°C, 15g of diethyl 2,3-diisopropyl succinate was added during the temperature rise process, the reaction was subsequently implemented at 120°C for 0.5 hour, the liquid was filtered off, 1L of titanium tetrachloride was added, the temperature was maintained at 120°C for 2 hours, the liquid was then filtered to obtain a solid product, the obtained solid product was washed with hexane for 5 times and finally dried under vacuum to prepare a catalyst component A (average particle diameter D50=41μm, SPAN value=0.80) which was denoted as A-14.

Preparation Example 15

650g of diethoxymagnesium carrier (average particle diameter D50=47μm), 3,250ml of toluene, and 65ml of di-n-butyl phthalate (DNBP) were taken to prepare a suspension liquid. 2,600mL of toluene and 3,900mL of titanium tetrachloride were added into a 16L pressure-resistant reaction kettle that was repeatedly replaced by high-purity nitrogen gas, the temperature was cooled to -5°C, the prepared suspension liquid was then added into the kettle, the constant temperature was kept for 1 hour, the temperature was further raised to 110°C, 65mL of DNBP was added when the temperature was raised to 80°C, the constant temperature was maintained for 2 hours, the liquid was subjected to filter pressing and removed completely. A mixed liquor of 5,070mL of toluene and 3,380mL of titanium tetrachloride was subsequently added, the mixed liquor was heated to 110°C and stirred for 1 hour, the treatment was performed in such a way 3 times, the liquid was filtered to obtain a solid, the obtained solid was washed with 150ml of hexane for 4 times, the liquid was filtered, the solid was dried to prepare a catalyst component A (average particle diameter D50=42μm, SPAN

value=0.82) which was denoted as A-15.

Preparation Example 16

650g of diethoxymagnesium carrier (average particle diameter D50=47μm), 3,250ml of toluene, and 65ml of diethyl 2,3-diisopropyl succinate were taken to prepare a suspension liquid. 2,600mL of toluene and 3,900mL of titanium tetrachloride were added into a 16L pressure-resistant reaction kettle that was repeatedly replaced by high-purity nitrogen gas, the temperature was cooled to -5°C, the prepared suspension liquid was then added into the kettle, the constant temperature was kept for 1 hour, the temperature was further raised to 110°C, 65mL of diethyl 2,3-diisopropyl succinate was added when the temperature was raised to 80°C, the constant temperature was maintained for 2 hours, the liquid was subjected to filter pressing and removed completely. A mixed liquor of 5,070mL of toluene and 3,380mL of titanium tetrachloride was subsequently added, the mixed liquor was heated to 110°C and stirred for 1 hour, the treatment was performed in such a way 3 times, the liquid was filtered to obtain a solid, the obtained solid was washed with 150ml of hexane for 4 times, the liquid was filtered, the solid was dried to prepare a catalyst component A (average particle diameter D50=42μm, SPAN value=0.82) which was denoted as A-16.

Preparation Example 17

1.2L of titanium tetrachloride was added into a 3L glass reaction flask equipped with a stirrer and cooled to -20°C, 100g of spherical magnesium compound carrier (average particle diameter D50=46μm) was added under the stirring condition, and the reaction was performed at -20°C for 0.5 hour, the temperature was then slowly raised to 120°C, 15g of diisobutyl phthalate was added during the temperature rise process, the reaction was subsequently implemented at 120°C for 0.5 hour, the liquid was filtered off, 1L of titanium tetrachloride was added, the temperature was maintained at 120°C for 2 hours, the liquid was then filtered to obtain a solid product, the obtained solid product was washed with hexane for 5 times and finally dried under vacuum to prepare a catalyst component A (average particle diameter D50=41μm, SPAN value=0.76) which was denoted as A-17.

Preparation Example 18

1.2L of titanium tetrachloride was added into a 3L glass reaction flask equipped with a stirrer and cooled to -20°C, 100g of spherical magnesium compound carrier (average particle diameter D50=46μm) was added under the stirring condition, and the reaction was performed at -20°C for 0.5 hour, the temperature was then slowly raised to 120°C, 15g of diethyl 2,3-diisopropyl succinate was added during the temperature rise process, the reaction was subsequently implemented at 120°C for 0.5 hour, the liquid was filtered off, 1L of titanium tetrachloride was added, the temperature was maintained at 120°C for 2 hours, the liquid was then filtered to obtain a solid product, the obtained solid product was washed with hexane for 5 times and finally dried under vacuum to prepare a catalyst component A (average particle diameter D50=42μm, SPAN value=0.78) which was denoted as A-18.

The following examples were used to illustrate the solid catalyst component and the preparation method thereof and the olefin polymerization method in the invention.

Example 1

(1) Preparation of solid catalyst component

1.1L of hexane, 15mmol of triethylaluminum, 0.3mmol of cyclohexyl methyl dimethoxy silane, and 25.0g of catalyst component A-1 were added into a high-pressure reaction kettle with a volume of 5L, the materials were reacted at 22°C for 10min; 10g of propylene was then added, the reaction was carried out at 23°C for 10min, the unreacted propylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum (at a temperature of 45°C for a time of 40min), and a solid catalyst component (average particle diameter D50=41μm, SPAN value=0.80) was obtained and denoted as E-1. The composition of the catalyst component E-1 was as follows: 2.2 wt% of titanium, 15.3 wt% of magnesium, 54.1 wt% of chlorine, 9.0 wt% of 2,4-pentanediol dibenzoate, and 9.5 wt% of polyolefin.

(2) Propylene polymerization A

1.3mmol of triethylaluminum, 0.05mmol of cyclohexyl methyl dimethoxy silane, 10mL of hexane, and 15mg of solid catalyst component E-1 were added into a high-pressure reaction kettle with a volume of 5L, 1.5NL of hydrogen gas was introduced, 2.0kg of liquid propylene was then added; the temperature was raised to 70°C under the stirring condition,

the polymerization reaction was carried out at 70°C for 1 hour; the stirring was stopped, and the unpolymerized propylene monomers were removed, a polypropylene was obtained and denoted as P-1A.

Propylene polymerization B

After the solid catalyst component E-1 was stored in nitrogen gas for 1 year, propylene was polymerized according to the method of propylene polymerization A, the prepared polypropylene was denoted as P-1B.

Example 2

(1) Preparation of solid catalyst component

1.0L of hexane, 15mmol of triethylaluminum, 0.3mmol of cyclohexyl methyl dimethoxy silane, and 25.0g of catalyst component A-2 were added into a high-pressure reaction kettle with a volume of 5L, the materials were reacted at 15°C for 10min; 12g of propylene was then added, the reaction was carried out at 22°C for 10min, the unreacted propylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=42μm, SPAN value=0.79) was obtained and denoted as E-2. The composition of the catalyst component E-2 was as follows: 2.1 wt% of titanium, 14.2 wt% of magnesium, 50.2 wt% of chlorine, 4.6 wt% of 2,4-pentanediol dibenzoate, 5.1 wt% of 2-isopropyl-2-isopentyl-1,3-dimethoxypropane, and 17.1 wt% of polyolefin.

(2) Propylene polymerization A

The polymerization was carried out according to the method in propylene polymerization A of Example 1, except that the solid catalyst component E-1 was replaced with the solid catalyst component E-2, a polypropylene was obtained and denoted as P-2A.

Propylene polymerization B

After the solid catalyst component E-2 was stored in nitrogen gas for 1 year, propylene was polymerized according to the method of propylene polymerization A, the prepared polypropylene was denoted as P-2B.

Example 3

(1) Preparation of solid catalyst component

1.0L of hexane, 15mmol of triethylaluminum, 0.3mmol of cyclohexyl methyl dimethoxy silane, and 25.0g of catalyst component A-2 were added into a high-pressure reaction kettle with a volume of 5L, the materials were reacted at 15°C for 10min; 12g of ethylene was then added, the reaction was carried out at 22°C for 10min, the unreacted ethylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=42μm, SPAN value=0.80) was obtained and denoted as E-3. The composition of the catalyst component E-2 was as follows: 2.1 wt% of titanium, 14.4 wt% of magnesium, 50.6 wt% of chlorine, 4.7 wt% of 2,4-pentanediol dibenzoate, 5.0 wt% of 2-isopropyl-2-isopentyl-1,3-dimethoxypropane, and 17.3 wt% of polyolefin.

(2) Propylene polymerization A

The polymerization was carried out according to the method in propylene polymerization A of Example 1, except that the solid catalyst component E-1 was replaced with the solid catalyst component E-3, a polypropylene was obtained and denoted as P-3A.

Propylene polymerization B

After the solid catalyst component E-3 was stored in nitrogen gas for 1 year, propylene was polymerized according to the method of propylene polymerization A, the prepared polypropylene was denoted as P-3B.

Example 4

(1) Preparation of solid catalyst component

1.0L of hexane, 15mmol of triethylaluminum, 0.3mmol of cyclohexyl methyl dimethoxy silane, and 25.0g of catalyst component A-2 were added into a high-pressure reaction kettle with a volume of 5L, the materials were reacted at 15°C for 10min; 15g of propylene was then added, the reaction was carried out at 22°C for 10min, the unreacted propylene was vented; the gas in said reaction kettle was replaced with nitrogen gas, a mixed gas of hydrogen gas and nitrogen gas having a hydrogen gas content of 20% by volume was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=43μm, SPAN value=0.81) was obtained and denoted as E-4. The composition of the catalyst component E-4 was as follows: 1.7 wt% of titanium, 11.6 wt% of magnesium, 40.3 wt% of chlorine, 3.9 wt% of 2,4-pentanediol dibenzoate, 4.2 wt% of 2-isopropyl-2-isopentyl-1,3-dimethoxypropane, and 33.2 wt% of polyolefin.

(2) Propylene polymerization A

The polymerization was carried out according to the method in propylene polymerization A of Example 1, except that the solid catalyst component E-1 was replaced with the solid catalyst component E-4, a polypropylene was obtained and denoted as P-4A.

Propylene polymerization B

After the solid catalyst component E-4 was stored in nitrogen gas for 1 year, propylene was polymerized according to the method of propylene polymerization A, the prepared polypropylene was denoted as P-4B.

Example 5

(1) Preparation of solid catalyst component

1.1L of hexane, 15mmol of triethylaluminum, 0.3mmol of cyclohexyl methyl dimethoxy silane, and 25.0g of catalyst component A-3 were added into a high-pressure reaction kettle with a volume of 5L, the materials were reacted at 22°C for 10min; 10g of propylene was then added, the reaction was carried out at 23°C for 10min, the unreacted propylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=43μm, SPAN value=0.83) was obtained and denoted as E-5.

(2) Propylene polymerization A

1.3mmol of triethylaluminum, 0.05mmol of cyclohexyl methyl dimethoxy silane, 10mL of hexane, and 15mg of solid catalyst component E-5 were added into a high-pressure reaction kettle with a volume of 5L, 1.5NL of hydrogen gas was introduced, 2.0kg of liquid propylene was then added; the temperature was raised to 70°C under the stirring condition, the polymerization reaction was carried out at 70°C for 1 hour; the stirring was stopped, and the unpolymerized propylene monomers were removed, a polypropylene was obtained and denoted as P-5A.

Propylene polymerization B

After the solid catalyst component E-5 was stored in nitrogen gas for 1 year, propylene was polymerized according to the method of propylene polymerization A, the prepared polypropylene was denoted as P-5B.

Example 6

(1) Preparation of solid catalyst component

1.0L of hexane, 15mmol of triethylaluminum, 0.3mmol of cyclohexyl methyl dimethoxy silane, and 25.0g of catalyst component A-4 were added into a high-pressure reaction kettle with a volume of 5L, the materials were reacted at 15°C for 10min; 10g of propylene was then added, the reaction was carried out at 22°C for 10min, the unreacted propylene

was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=43μm, SPAN value=0.83) was obtained and denoted as E-6.

(2) Propylene polymerization A

The polymerization was carried out according to the method in propylene polymerization A of Example 5, except that the solid catalyst component E-5 was replaced with the solid catalyst component E-6, a polypropylene was obtained and denoted as P-6A.

Propylene polymerization B

After the solid catalyst component E-6 was stored in nitrogen gas for 1 year, propylene was polymerized according to the method of propylene polymerization A, the prepared polypropylene was denoted as P-6B.

Example 7

(1) Preparation of solid catalyst component

1.0L of hexane, 15mmol of triethylaluminum, 0.3mmol of cyclohexyl methyl dimethoxy silane, and 25.0g of catalyst component A-4 were added into a high-pressure reaction kettle with a volume of 5L, the materials were reacted at 15°C for 10min; 10g of ethylene was then added, the reaction was carried out at 22°C for 10min, the unreacted ethylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=42μm, SPAN value=0.82) was obtained and denoted as E-7.

(2) Propylene polymerization A

The polymerization was carried out according to the method in propylene polymerization A of Example 5, except that the solid catalyst component E-5 was replaced with the solid catalyst component E-7, a polypropylene was obtained and denoted as P-7A.

Propylene polymerization B

After the solid catalyst component E-7 was stored in nitrogen gas for 1 year, propylene was polymerized according to the method of propylene polymerization A, the prepared polypropylene was denoted as P-7B.

Example 8

(1) Preparation of solid catalyst component

1.1L of hexane, 15mmol of triethylaluminum, 0.3mmol of cyclohexyl methyl dimethoxy silane, and 25.0g of catalyst component A-5 were added into a high-pressure reaction kettle with a volume of 5L, the materials were reacted at 22°C for 10min; 10g of propylene was then added, the reaction was carried out at 23°C for 10min, the unreacted propylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=41μm, SPAN value=0.77) was obtained and denoted as E-8.

(2) Propylene polymerization A

1.3mmol of triethylaluminum, 0.05mmol of cyclohexyl methyl dimethoxy silane, 10mL of hexane, and 15mg of solid catalyst component E-8 were added into a high-pressure reaction kettle with a volume of 5L, 1.5NL of hydrogen gas was introduced, 2.0kg of liquid propylene was then added; the temperature was raised to 70°C under the stirring condition, the polymerization reaction was carried out at 70°C for 1 hour; the stirring was stopped, and the unpolymerized propylene monomers were removed, a polypropylene was obtained and denoted as P-8A.

Propylene polymerization B

After the solid catalyst component E-8 was stored in nitrogen gas for 1 year, propylene was polymerized according to the method of propylene polymerization A, the prepared polypropylene was denoted as P-8B.

Example 9

(1) Preparation of solid catalyst component

1.0L of hexane, 15mmol of triethylaluminum, 0.3mmol of cyclohexyl methyl dimethoxy silane, and 25.0g of catalyst component A-6 were added into a high-pressure reaction kettle with a volume of 5L, the materials were reacted at 15°C for 10min; 10g of propylene was then added, the reaction was carried out at 22°C for 10min, the unreacted propylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=42μm, SPAN value=0.77) was obtained and denoted as E-9.

(2) Propylene polymerization A

The polymerization was carried out according to the method in propylene polymerization A of Example 8, except that the solid catalyst component E-8 was replaced with the solid catalyst component E-9, a polypropylene was obtained and denoted as P-9A.

Propylene polymerization B

After the solid catalyst component E-9 was stored in nitrogen gas for 1 year, propylene was polymerized according to the method of propylene polymerization A, the prepared polypropylene was denoted as P-9B.

Example 10

(1) Preparation of solid catalyst component

1.0L of hexane, 15mmol of triethylaluminum, 0.3mmol of cyclohexyl methyl dimethoxy silane, and 25.0g of catalyst component A-6 were added into a high-pressure reaction kettle with a volume of 5L, the materials were reacted at 15°C for 10min; 10g of ethylene was then added, the reaction was carried out at 22°C for 10min, the unreacted ethylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=42μm, SPAN value=0.77) was obtained and denoted as E-10.

(2) Propylene polymerization A

The polymerization was carried out according to the method in propylene polymerization A of Example 8, except that the solid catalyst component E-8 was replaced with the solid catalyst component E-10, a polypropylene was obtained and denoted as P-10A.

Propylene polymerization B

After the solid catalyst component E-10 was stored in nitrogen gas for 1 year, propylene was polymerized according to the method of propylene polymerization A, and the prepared polypropylene was denoted as P-10B.

Example 11

(1) Preparation of solid catalyst component

1.0L of hexane, 20mmol of triethylaluminum, 0.3mmol of cyclohexyl methyl dimethoxy silane, and 25.0g of catalyst component A-7 were added into a high-pressure reaction kettle with a volume of 5L, the materials were reacted at 22°C for 10min; 6g of propylene was then added, the reaction was carried out at 23°C for 10min, the unreacted propylene

was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=41μm, SPAN value=0.80) was obtained and denoted as E-11. The composition of the catalyst component E-11 was as follows: 2.2 wt% of titanium, 16.3 wt% of magnesium, 53.1 wt% of chlorine, 9.1 wt% of 2-isopropyl-2-isopentyl-1,3-dimethoxypropane, and 13.0 wt% of polyolefin.

(2) Propylene polymerization A

1.3mmol of triethylaluminum, 0.05mmol of cyclohexyl methyl dimethoxy silane, 10mL of hexane, and 15mg of solid catalyst component E-11 were added into a high-pressure reaction kettle with a volume of 5L, 1.5NL of hydrogen gas was introduced, 2.0kg of liquid propylene was then added; the temperature was raised to 70°C under the stirring condition, the polymerization reaction was carried out at 70°C for 1 hour; the stirring was stopped, and the unpolymerized propylene monomers were removed, a polypropylene was obtained and denoted as P-11A.

Propylene polymerization B

After the solid catalyst component E-11 was stored in nitrogen gas for 1 year, propylene was polymerized according to the method of propylene polymerization A, and the prepared polypropylene was denoted as P-11B.

Example 12

(1) Preparation of solid catalyst component

The solid catalyst component was prepared according to the method in Example 11, except that the catalyst component A-7 was replaced by the catalyst component A-8. A solid catalyst component (average particle diameter D50=41μm, SPAN value=0.80) was obtained and denoted as E-12. The composition of the catalyst component E-12 was as follows: 2.3 wt% of titanium, 16.1 wt% of magnesium, 52.8 wt% of chlorine, 8.9 wt% of 2-isopropyl-2-isopentyl-1,3-dimethoxypropane, and 13.2 wt% of polyolefin.

(2) Propylene polymerization A

The polymerization was carried out according to the method in propylene polymerization A of Example 11, except that the solid catalyst component E-11 was replaced with the solid catalyst component E-12, a polypropylene was obtained and denoted as P-12A.

Propylene polymerization B

The polymerization was carried out according to the method in propylene polymerization B of Example 11, except that the solid catalyst component E-11 was replaced with the solid catalyst component E-12, a polypropylene was obtained and denoted as P-12B.

Example 13

(1) Preparation of solid catalyst component

The solid catalyst component was prepared according to the method in Example 11, except that the propylene was replaced by ethylene, and a solid catalyst component (average particle diameter D50=41μm, SPAN value=0.80) was obtained and denoted as E-13. The composition of the catalyst component E-13 was as follows: 2.2 wt% of titanium, 16.2 wt% of magnesium, 52.9 wt% of chlorine, 9.0 wt% of 2-isopropyl-2-isopentyl-1,3-dimethoxypropane, and 13.5 wt% of polyolefin.

(2) Propylene polymerization A

The polymerization was carried out according to the method in propylene polymerization A of Example 11, except that the solid catalyst component E-11 was replaced with the solid catalyst component E-13, a polypropylene was obtained and denoted as P-13A.

Propylene polymerization B

The polymerization was carried out according to the method in propylene polymerization B of Example 11, except that the solid catalyst component E-11 was replaced with the solid catalyst component E-13, a polypropylene was obtained and denoted as P-13B.

Example 14

(1) Preparation of solid catalyst component

The solid catalyst component was prepared according to the method in Example 11, except that 6g of propylene was replaced by 5g of propylene and 0.2g of ethylene, and a solid catalyst component (average particle diameter D50=41μm, SPAN value=0.80) was obtained and denoted as E-14. The composition of the catalyst component E-14 was as follows: 2.2 wt% of titanium, 16.6 wt% of magnesium, 53.8 wt% of chlorine, 9.0 wt% of 2-isopropyl-2-isopentyl-1,3-dimethoxypropane, and 13.1 wt% of polyolefin.

(2) Propylene polymerization A

The polymerization was carried out according to the method in propylene polymerization A of Example 11, except that the solid catalyst component E-11 was replaced with the solid catalyst component E-14, a polypropylene was obtained and denoted as P-14A.

Propylene polymerization B

The polymerization was carried out according to the method in propylene polymerization B of Example 11, except that the solid catalyst component E-11 was replaced with the solid catalyst component E-14, a polypropylene was obtained and denoted as P-14B.

Example 15

(1) Preparation of solid catalyst component

1.0L of hexane, 20mmol of triethylaluminum, 0.3mmol of cyclohexyl methyl dimethoxy silane, and 25.0g of catalyst component A-7 were added into a high-pressure reaction kettle with a volume of 5L, the materials were reacted at 22°C for 10min; 15g of propylene was then added, the reaction was carried out at 23°C for 10min, the unreacted propylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=41μm, SPAN value=0.81) was obtained and denoted as E-15. The composition of the catalyst component E-15 was as follows: 1.7 wt% of titanium, 12.6 wt% of magnesium, 40.2 wt% of chlorine, 7.0 wt% of 2-isopropyl-2-isopentyl-1,3-dimethoxypropane, and 33.8 wt% of polyolefin.

(2) Propylene polymerization A

The polymerization was carried out according to the method in propylene polymerization A of Example 11, except that the solid catalyst component E-11 was replaced with the solid catalyst component E-15, a polypropylene was obtained and denoted as P-15A.

Propylene polymerization B

After the solid catalyst component E-15 was stored in nitrogen gas for 1 year, propylene was polymerized according to the method of propylene polymerization A, and the prepared polypropylene was denoted as P-15B.

Example 16

(1) Preparation of solid catalyst component

1.0L of hexane, 20mmol of triethylaluminum, 0.3mmol of cyclohexyl methyl dimethoxy silane, and 25.0g of

catalyst component A-9 were added into a high-pressure reaction kettle with a volume of 5L, the materials were reacted at 22°C for 10min; 6g of propylene was then added, the reaction was carried out at 23°C for 10min, the unreacted propylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=43μm, SPAN value=0.83) was obtained and denoted as E-16.

(2) Propylene polymerization A

1.3mmol of triethylaluminum, 0.05mmol of cyclohexyl methyl dimethoxy silane, 10mL of hexane, and 15mg of solid catalyst component E-16 were added into a high-pressure reaction kettle with a volume of 5L, 1.5NL of hydrogen gas was introduced, 2.0kg of liquid propylene was then added; the temperature was raised to 70°C under the stirring condition, the polymerization reaction was carried out at 70°C for 1 hour; the stirring was stopped, and the unpolymerized propylene monomers were removed, a polypropylene was obtained and denoted as P-16A.

Propylene polymerization B

After the solid catalyst component E-16 was stored in nitrogen gas for 1 year, propylene was polymerized according to the method of propylene polymerization A, and the prepared polypropylene was denoted as P-16B.

Example 17

(1) Preparation of solid catalyst component

The solid catalyst component was prepared according to the method in Example 16, except that the catalyst component A-9 was replaced by the catalyst component A-10. A solid catalyst component (average particle diameter D50=43μm, SPAN value=0.83) was obtained and denoted as E-17.

(2) Propylene polymerization A

The polymerization was carried out according to the method in propylene polymerization A of Example 16, except that the solid catalyst component E-16 was replaced with the solid catalyst component E-17, a polypropylene was obtained and denoted as P-17A.

Propylene polymerization B

The polymerization was carried out according to the method in propylene polymerization B of Example 16, except that the solid catalyst component E-16 was replaced with the solid catalyst component E-17, a polypropylene was obtained and denoted as P-17B.

Example 18

(1) Preparation of solid catalyst component

The solid catalyst component was prepared according to the method in Example 16, except that the propylene was replaced by ethylene, and a solid catalyst component (average particle diameter D50=43μm, SPAN value=0.83) was obtained and denoted as E-18.

(2) Propylene polymerization A

The polymerization was carried out according to the method in propylene polymerization A of Example 16, except that the solid catalyst component E-16 was replaced with the solid catalyst component E-18, a polypropylene was obtained and denoted as P-18A.

Propylene polymerization B

The polymerization was carried out according to the method in propylene polymerization B of Example 16, except that the solid catalyst component E-16 was replaced with the solid catalyst component E-18, a polypropylene was obtained

and denoted as P-18B.

Example 19

(1) Preparation of solid catalyst component

The solid catalyst component was prepared according to the method in Example 16, except that 6g of propylene was replaced by 5g of propylene and 0.2g of ethylene, and a solid catalyst component (average particle diameter D50=43μm, SPAN value=0.83) was obtained and denoted as E-19.

(2) Propylene polymerization A

The polymerization was carried out according to the method in propylene polymerization A of Example 16, except that the solid catalyst component E-16 was replaced with the solid catalyst component E-19, a polypropylene was obtained and denoted as P-19A.

Propylene polymerization B

The polymerization was carried out according to the method in propylene polymerization B of Example 16, except that the solid catalyst component E-16 was replaced with the solid catalyst component E-19, a polypropylene was obtained and denoted as P-19B.

Example 20

(1) Preparation of solid catalyst component

1.0L of hexane, 20mmol of triethylaluminum, 0.3mmol of cyclohexyl methyl dimethoxy silane, and 25.0g of catalyst component A-11 were added into a high-pressure reaction kettle with a volume of 5L, the materials were reacted at 22°C for 10min; 6g of propylene was then added, the reaction was carried out at 23°C for 10min, the unreacted propylene was vented; the gas in said reaction kettle was replaced with nitrogen gas, hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=41μm, SPAN value=0.77) was obtained and denoted as E-20.

(2) Propylene polymerization A

1.3mmol of triethylaluminum, 0.05mmol of cyclohexyl methyl dimethoxy silane, 10mL of hexane, and 15mg of solid catalyst component E-20 were added into a high-pressure reaction kettle with a volume of 5L, 1.5NL of hydrogen gas was introduced, 2.0kg of liquid propylene was then added; the temperature was raised to 70°C under the stirring condition, the polymerization reaction was carried out at 70°C for 1 hour; the stirring was stopped, and the unpolymerized propylene monomers were removed, a polypropylene was obtained and denoted as P-20A.

Propylene polymerization B

After the solid catalyst component E-20 was stored in nitrogen gas for 1 year, propylene was polymerized according to the method of propylene polymerization A, and the prepared polypropylene was denoted as P-20B.

Example 21

(1) Preparation of solid catalyst component

The solid catalyst component was prepared according to the method in Example 20, except that the catalyst component A-11 was replaced by the catalyst component A-12. A solid catalyst component (average particle diameter D50=41μm, SPAN value=0.77) was obtained and denoted as E-21.

(2) Propylene polymerization A

The polymerization was carried out according to the method in propylene polymerization A of Example 20, except

that the solid catalyst component E-20 was replaced with the solid catalyst component E-21, a polypropylene was obtained and denoted as P-21A.

Propylene polymerization B

The polymerization was carried out according to the method in propylene polymerization B of Example 20, except that the solid catalyst component E-20 was replaced with the solid catalyst component E-21, a polypropylene was obtained and denoted as P-21B.

Example 22

(1) Preparation of solid catalyst component

The solid catalyst component was prepared according to the method in Example 20, except that the propylene was replaced by ethylene, and a solid catalyst component (average particle diameter D50=41μm, SPAN value=0.77) was obtained and denoted as E-22.

(2) Propylene polymerization A

The polymerization was carried out according to the method in propylene polymerization A of Example 20, except that the solid catalyst component E-20 was replaced with the solid catalyst component E-22, a polypropylene was obtained and denoted as P-22A.

Propylene polymerization B

The polymerization was carried out according to the method in propylene polymerization B of Example 20, except that the solid catalyst component E-20 was replaced with the solid catalyst component E-22, a polypropylene was obtained and denoted as P-22B.

Example 23

(1) Preparation of solid catalyst component

The solid catalyst component was prepared according to the method in Example 20, except that 6g of propylene was replaced by 5g of propylene and 0.2g of ethylene, and a solid catalyst component (average particle diameter D50=41μm, SPAN value=0.77) was obtained and denoted as E-23.

(2) Propylene polymerization A

The polymerization was carried out according to the method in propylene polymerization A of Example 20, except that the solid catalyst component E-20 was replaced with the solid catalyst component E-23, a polypropylene was obtained and denoted as P-23A.

Propylene polymerization B

The polymerization was carried out according to the method in propylene polymerization B of Example 20, except that the solid catalyst component E-20 was replaced with the solid catalyst component E-23, a polypropylene was obtained and denoted as P-23B.

Example 24

(1) Preparation of solid catalyst component

1.0L of hexane, 16mmol of triethylaluminum, 0.3mmol of cyclohexyl methyl dimethoxy silane, and 25.0g of catalyst component A-13 were added into a high-pressure reaction kettle with a volume of 5L, the materials were reacted at 22°C for 10min; 10g of propylene was then added, the reaction was carried out at 15°C for 10min, the unreacted propylene was vented; the gas in said reaction kettle was replaced with nitrogen gas, hydrogen gas was added till a reaction pressure of 0.3MPa, the reaction was performed at 15°C for 10min, the unreacted hydrogen gas was evacuated. After the liquid in

the reaction product was filtered out, the reaction product was dried under vacuum, and a solid catalyst component (average particle diameter D50=41μm, SPAN value=0.80) was obtained and denoted as E-24. The composition of the catalyst component E-24 was as follows: 2.3 wt% of titanium, 15.5 wt% of magnesium, 54.3 wt% of chlorine, 8.7 wt% of diisobutyl phthalate, and 9.5 wt% of polyolefin.

(2) Propylene polymerization A

5.0mmol of triethylaluminum, 0.2mmol of cyclohexyl methyl dimethoxy silane, 10mL of hexane, and 15mg of solid catalyst component E-24 were added into a high-pressure reaction kettle with a volume of 5L, 1.5NL of hydrogen gas was introduced, 2.0kg of liquid propylene was then added; the temperature was raised to 70°C under the stirring condition, the polymerization reaction was carried out at 70°C for 1 hour; the stirring was stopped, and the unpolymerized propylene monomers were removed, a polypropylene was obtained and denoted as P-24A.

Propylene polymerization B

After the solid catalyst component E-24 was stored in nitrogen gas for 1 year, propylene was polymerized according to the method of propylene polymerization A, and the prepared polypropylene was denoted as P-24B.

Example 25

(1) Preparation of solid catalyst component

The solid catalyst component was prepared according to the method in Example 24, except that the propylene was replaced by ethylene, and a solid catalyst component (average particle diameter D50=42μm, SPAN value=0.82) was obtained and denoted as E-25. The composition of the catalyst component E-25 was as follows: 2.3 wt% of titanium, 15.1 wt% of magnesium, 54.9 wt% of chlorine, 8.5 wt% of diisobutyl phthalate, and 9.4 wt% of polyolefin.

(2) Propylene polymerization A

The propylene polymerization was carried out according to the method in propylene polymerization A of Example 24, except that the solid catalyst component E-24 was replaced with the solid catalyst component E-25, a polypropylene was obtained and denoted as P-25A.

Propylene polymerization B

After the solid catalyst component E-25 was stored in nitrogen gas for 1 year, propylene was polymerized according to the method of propylene polymerization A in Example 24, the prepared polypropylene was denoted as P-25B.

Example 26

(1) Preparation of solid catalyst component

The solid catalyst component was prepared according to the method in Example 24, except that the catalyst component A13 was replaced by catalyst component A14, and a solid catalyst component (average particle diameter D50=42μm, SPAN value=0.81) was obtained and denoted as E-26. The composition of the catalyst component E-26 was as follows: 2.2 wt% of titanium, 15.2 wt% of magnesium, 55.0 wt% of chlorine, 9.0 wt% of diethyl 2,3-diisopropyl succinate, and 9.1 wt% of polyolefin.

(2) Propylene polymerization A

The propylene polymerization was carried out according to the method in propylene polymerization A of Example 24, except that the solid catalyst component E-24 was replaced with the solid catalyst component E-26, a polypropylene was obtained and denoted as P-26A.

Propylene polymerization B

After the solid catalyst component E-26 was stored in nitrogen gas for 1 year, propylene was polymerized according to the method of propylene polymerization A in Example 24, the prepared polypropylene was denoted as P-26B.

Example 27

(1) Preparation of solid catalyst component

1.0L of hexane, 15mmol of triethylaluminum, 0.3mmol of cyclohexyl methyl dimethoxy silane, and 25.0g of catalyst component A-14 were added into a high-pressure reaction kettle with a volume of 5L, the materials were reacted at 15°C for 10min; 15g of propylene was then added, the reaction was carried out at 22°C for 10min, the unreacted propylene was vented; the gas in said reaction kettle was replaced with nitrogen gas, a mixed gas containing 20% of hydrogen gas was added till a reaction pressure of 0.2MPa, the reaction was performed at 15°C for 10min, the unreacted hydrogen gas was evacuated. After the liquid in the reaction product was filtered out, the reaction product was dried under vacuum, and a solid catalyst component (average particle diameter D50=42μm, SPAN value=0.82) was obtained and denoted as E-27. The composition of the catalyst component E-27 was as follows: 1.6 wt% of titanium, 11.9 wt% of magnesium, 39.3 wt% of chlorine, 6.0 wt% of diethyl 2,3-diisopropyl succinate, and 32.5 wt% of polyolefin.

(2) Propylene polymerization A

The polymerization was carried out according to the method in propylene polymerization A of Example 24, except that the solid catalyst component E-24 was replaced with the solid catalyst component E-27, a polypropylene was obtained and denoted as P-27A.

Propylene polymerization B

After the solid catalyst component E-27 was stored in nitrogen gas for 1 year, propylene was polymerized according to the method of propylene polymerization A, and the prepared polypropylene was denoted as P-27B.

Example 28

(1) Preparation of solid catalyst component

1.0L of hexane, 16mmol of triethylaluminum, 0.3mmol of cyclohexyl methyl dimethoxy silane, and 25.0g of catalyst component A-15 were added into a high-pressure reaction kettle with a volume of 5L, the materials were reacted at 22°C for 10min; 10g of propylene was then added, the reaction was carried out at 15°C for 10min, the unreacted propylene was vented; the gas in said reaction kettle was replaced with nitrogen gas, hydrogen gas was added till a reaction pressure of 0.3MPa, the reaction was performed at 15°C for 10min, the unreacted hydrogen gas was evacuated. After the liquid in the reaction product was filtered out, the reaction product was dried under vacuum, and a solid catalyst component (average particle diameter D50=43μm, SPAN value=0.83) was obtained and denoted as E-28.

(2) Propylene polymerization A

5.0mmol of triethylaluminum, 0.2mmol of cyclohexyl methyl dimethoxy silane, 10mL of hexane, and 15mg of solid catalyst component E-28 were added into a high-pressure reaction kettle with a volume of 5L, 1.5NL of hydrogen gas was introduced, 2.0kg of liquid propylene was then added; the temperature was raised to 70°C under the stirring condition, the polymerization reaction was carried out at 70°C for 1 hour; the stirring was stopped, and the unpolymerized propylene monomers were removed, a polypropylene was obtained and denoted as P-28A.

Propylene polymerization B

After the solid catalyst component E-28 was stored in nitrogen gas for 1 year, propylene was polymerized according to the method of propylene polymerization A, and the prepared polypropylene was denoted as P-28B.

Example 29

(1) Preparation of solid catalyst component

The solid catalyst component was prepared according to the method in Example 28, except that the propylene was replaced by ethylene, and a solid catalyst component (average particle diameter D50=43μm, SPAN value=0.83) was obtained and denoted as E-29.

(2) Propylene polymerization A

The propylene polymerization was carried out according to the method in propylene polymerization A of Example 28, except that the solid catalyst component E-28 was replaced with the solid catalyst component E-29, a polypropylene was obtained and denoted as P-29A.

Propylene polymerization B

After the solid catalyst component E-29 was stored in nitrogen gas for 1 year, propylene was polymerized according to the method of propylene polymerization A in Example 28, the prepared polypropylene was denoted as P-29B.

Example 30

(1) Preparation of solid catalyst component

The solid catalyst component was prepared according to the method in Example 28, except that the catalyst component A15 was replaced by catalyst component A16, and a solid catalyst component (average particle diameter D50=43μm, SPAN value=0.83) was obtained and denoted as E-30.

(2) Propylene polymerization A

The propylene polymerization was carried out according to the method in propylene polymerization A of Example 28, except that the solid catalyst component E-28 was replaced with the solid catalyst component E-30, a polypropylene was obtained and denoted as P-30A.

Propylene polymerization B

After the solid catalyst component E-30 was stored in nitrogen gas for 1 year, propylene was polymerized according to the method of propylene polymerization A in Example 28, the prepared polypropylene was denoted as P-30B.

Example 31

(1) Preparation of solid catalyst component

1.0L of hexane, 16mmol of triethylaluminum, 0.3mmol of cyclohexyl methyl dimethoxy silane, and 25.0g of catalyst component A-17 were added into a high-pressure reaction kettle with a volume of 5L, the materials were reacted at 22°C for 10min; 10g of propylene was then added, the reaction was carried out at 15°C for 10min, the unreacted propylene was vented; the gas in said reaction kettle was replaced with nitrogen gas, hydrogen gas was added till a reaction pressure of 0.3MPa, the reaction was performed at 15°C for 10min, the unreacted hydrogen gas was evacuated. After the liquid in the reaction product was filtered out, the reaction product was dried under vacuum, and a solid catalyst component (average particle diameter D50=42μm, SPAN value=0.77) was obtained and denoted as E-31.

(2) Propylene polymerization A

5.0mmol of triethylaluminum, 0.2mmol of cyclohexyl methyl dimethoxy silane, 10mL of hexane, and 15mg of solid catalyst component E-31 were added into a high-pressure reaction kettle with a volume of 5L, 1.5NL of hydrogen gas was introduced, 2.0kg of liquid propylene was then added; the temperature was raised to 70°C under the stirring condition, the polymerization reaction was carried out at 70°C for 1 hour; the stirring was stopped, and the unpolymerized propylene monomers were removed, a polypropylene was obtained and denoted as P-31A.

Propylene polymerization B

After the solid catalyst component E-31 was stored in nitrogen gas for 1 year, propylene was polymerized according to the method of propylene polymerization A, and the prepared polypropylene was denoted as P-31B.

Example 32

(1) Preparation of solid catalyst component

The solid catalyst component was prepared according to the method in Example 31, except that the propylene was replaced by ethylene, and a solid catalyst component (average particle diameter D50=42μm, SPAN value=0.77) was obtained and denoted as E-32.

(2) Propylene polymerization A

The propylene polymerization was carried out according to the method in propylene polymerization A of Example 31, except that the solid catalyst component E-31 was replaced with the solid catalyst component E-32, a polypropylene was obtained and denoted as P-32A.

Propylene polymerization B

After the solid catalyst component E-32 was stored in nitrogen gas for 1 year, propylene was polymerized according to the method of propylene polymerization A in Example 31, the prepared polypropylene was denoted as P-32B.

Example 33

(1) Preparation of solid catalyst component

The solid catalyst component was prepared according to the method in Example 31, except that the catalyst component A-17 was replaced by the catalyst component A-18, and a solid catalyst component (average particle diameter D50=43μm, SPAN value=0.79) was obtained and denoted as E-33.

(2) Propylene polymerization A

The propylene polymerization was carried out according to the method in propylene polymerization A of Example 31, except that the solid catalyst component E-31 was replaced with the solid catalyst component E-33, a polypropylene was obtained and denoted as P-33A.

Propylene polymerization B

After the solid catalyst component E-33 was stored in nitrogen gas for 1 year, propylene was polymerized according to the method of propylene polymerization A in Example 31, the prepared polypropylene was denoted as P-33B.

Comparative Example 1

(1) Preparation of solid catalyst component

1.0L of hexane, 15mmol of triethylaluminum, 0.3mmol of cyclohexyl methyl dimethoxy silane, and 25.0g of catalyst component A-1 were added into a high-pressure reaction kettle with a volume of 5L, the materials were reacted at 22°C for 10min; 10g of propylene and 2g of hydrogen gas were then added, the reaction was carried out at 23°C for 10min, the unreacted propylene was vented; the gas in said reaction kettle was replaced with nitrogen gas. After the liquid in the reaction product was filtered out, the reaction product was dried under a vacuum, a solid catalyst component was obtained and denoted as CE-1.

(2) Propylene polymerization A

The propylene polymerization was carried out according to the method in propylene polymerization A of Example 1, except that the solid catalyst component E-1 was replaced with the solid catalyst component CE-1, a polypropylene was obtained and denoted as CP-1A.

Propylene polymerization B

The propylene polymerization was carried out according to the method in propylene polymerization B of Example 1, except that the solid catalyst component E-1 was replaced with the solid catalyst component CE-1, a polypropylene was obtained and denoted as CP-1B.

Comparative Example 2

(1) Preparation of solid catalyst component

1.0L of hexane, 15mmol of triethylaluminum, 0.3mmol of cyclohexyl methyl dimethoxy silane, and 25.0g of catalyst component A-4 were added into a high-pressure reaction kettle with a volume of 5L, the materials were reacted at 15°C for 10min; 10g of ethylene was then added, the reaction was carried out at 22°C for 10min, the unreacted ethylene was vented; the gas in said reaction kettle was replaced with nitrogen gas. After the liquid in the reaction product was filtered out, the reaction product was dried under vacuum, a solid catalyst component was obtained and denoted as CE-2.

(2) Propylene polymerization A

The propylene polymerization was carried out according to the method in propylene polymerization A of Example 6, except that the solid catalyst component E-6 was replaced with the solid catalyst component CE-2, a polypropylene was obtained and denoted as CP-2A.

Propylene polymerization B

The propylene polymerization was carried out according to the method in propylene polymerization B of Example 6, except that the solid catalyst component E-6 was replaced with the solid catalyst component CE-2, a polypropylene was obtained and denoted as CP-2B.

Comparative Example 3

(1) Preparation of solid catalyst component

1.0L of hexane, 20mmol of triethylaluminum, 0.3mmol of cyclohexyl methyl dimethoxy silane, and 25.0g of catalyst component A-7 were added into a high-pressure reaction kettle with a volume of 5L, the materials were reacted at 22°C for 10min; 6g of propylene was then added, the reaction was carried out at 23°C for 10min, the unreacted propylene was vented. After the liquid in the reaction product was filtered out, the reaction product was dried under vacuum, a solid catalyst component was obtained and denoted as CE-3.

(2) Propylene polymerization A

The polymerization was carried out according to the method in propylene polymerization A of Example 10, except that the solid catalyst component E-10 was replaced with the solid catalyst component CE-3, a polypropylene was obtained and denoted as CP-3A.

Propylene polymerization B

The polymerization was carried out according to the method in propylene polymerization B of Example 10, except that the solid catalyst component E-10 was replaced with the solid catalyst component CE-3, a polypropylene was obtained and denoted as CP-3B.

Comparative Example 4

(1) Preparation of solid catalyst component

The solid catalyst component was prepared according to the method in Comparative Example 3, except that 6g of propylene was replaced with 6g of ethylene, a solid catalyst component was obtained and denoted as CE-4.

(2) Propylene polymerization A

The polymerization was carried out according to the method in propylene polymerization A of Example 10, except that the solid catalyst component E-10 was replaced with the solid catalyst component CE-4, a polypropylene was obtained and denoted as CP-4A.

Propylene polymerization B

The polymerization was carried out according to the method in propylene polymerization B of Example 10, except that the solid catalyst component E-10 was replaced with the solid catalyst component CE-4, a polypropylene was obtained and denoted as CP-4B.

Comparative Example 5

(1) Preparation of solid catalyst component

1.0L of hexane, 20mmol of triethylaluminum, 0.3mmol of cyclohexyl methyl dimethoxy silane, and 25.0g of catalyst component A-7 were added into a high-pressure reaction kettle with a volume of 5L, the materials were reacted at 22°C for 10min; 6g of ethylene and 2g of hydrogen gas were then added, the reaction was carried out at 23°C for 10min, the unreacted gas was vented; after the liquid in the reaction product was filtered out, the reaction product was dried under vacuum, a solid catalyst component was obtained and denoted as CE-5.

(2) Propylene polymerization A

The polymerization was carried out according to the method in propylene polymerization A of Example 10, except that the solid catalyst component E-10 was replaced with the solid catalyst component CE-5, a polypropylene was obtained and denoted as CP-5A.

Propylene polymerization B

The polymerization was carried out according to the method in propylene polymerization B of Example 10, except that the solid catalyst component E-10 was replaced with the solid catalyst component CE-5, a polypropylene was obtained and denoted as CP-5B.

Comparative Example 6

(1) Preparation of solid catalyst component

1.0L of hexane, 16mmol of triethylaluminum, 0.3mmol of cyclohexyl methyl dimethoxy silane, and 25.0g of catalyst component A-13 were added into a high-pressure reaction kettle with a volume of 5L, the materials were reacted at 22°C for 10min; 10g of propylene was then added, the reaction was carried out at 15°C for 10min, the unreacted propylene was vented; the gas in said reaction kettle was replaced with nitrogen gas. After the liquid in the reaction product was filtered out, the reaction product was dried under vacuum, a solid catalyst component was obtained and denoted as CE-6.

(2) Propylene polymerization A

The propylene polymerization was carried out according to the method in propylene polymerization A of Example 24, except that the solid catalyst component E-24 was replaced with the solid catalyst component CE-6, a polypropylene was obtained and denoted as CP-6A.

Propylene polymerization B

The propylene polymerization was carried out according to the method in propylene polymerization B of Example 24, except that the solid catalyst component E-24 was replaced with the solid catalyst component CE-6, a polypropylene was obtained and denoted as CP-6B.

Comparative Example 7

(1) Preparation of solid catalyst component

1.0L of hexane, 16mmol of triethylaluminum, 0.3mmol of cyclohexyl methyl dimethoxy silane, and 25.0g of catalyst component A-13 were added into a high-pressure reaction kettle with a volume of 5L, the materials were reacted at 22°C for 10min; 10g of ethylene and 2g of hydrogen gas were then added, the reaction was carried out at 15°C for 10min, the unreacted gas was vented; after the liquid in the reaction product was filtered out, the reaction product was dried under

vacuum, a solid catalyst component was obtained and denoted as CE-7.

(2) Propylene polymerization A

The polymerization was carried out according to the method in propylene polymerization A of Example 24, except that the solid catalyst component E-24 was replaced with the solid catalyst component CE-7, a polypropylene was obtained and denoted as CP-7A.

Propylene polymerization B

The polymerization was carried out according to the method in propylene polymerization B of Example 24, except that the solid catalyst component E-24 was replaced with the solid catalyst component CE-7, a polypropylene was obtained and denoted as CP-7B.

Comparative Example 8

(1) Preparation of solid catalyst component

1.0L of hexane, 16mmol of triethylaluminum, 0.3mmol of cyclohexyl methyl dimethoxy silane, and 25.0g of catalyst component A-13 were added into a high-pressure reaction kettle with a volume of 5L, the materials were reacted at 22°C for 10min; 10g of propylene and 2g of hydrogen gas were then added, the reaction was carried out at 15°C for 10min, the unreacted gas was vented; after the liquid in the reaction product was filtered out, the reaction product was dried under vacuum, a solid catalyst component was obtained and denoted as CE-8.

(2) Propylene polymerization A

The polymerization was carried out according to the method in propylene polymerization A of Example 24, except that the solid catalyst component E-24 was replaced with the solid catalyst component CE-8, a polypropylene was obtained and denoted as CP-8A.

Propylene polymerization B

The polymerization was carried out according to the method in propylene polymerization B of Example 24, except that the solid catalyst component E-24 was replaced with the solid catalyst component CE-8, a polypropylene was obtained and denoted as CP-8B.

Table 1 $Ti2p_{3/2}$ electron binding energy of titanium in the solid catalyst components

| Catalyst | $Ti2p_{3/2}$ electron binding energy (eV) | | | $S_3$: ($S_3$+$S_2$+$S_1$) |
|---|---|---|---|---|
| components | First characteristic peak | Second characteristic peak | Third characteristic peak | 100% |
| E-1 | 459.09 | 457.61 | 455.80 | 6.8 |
| E-2 | 459.12 | 457.62 | 455.82 | 7.9 |
| E-3 | 459.10 | 457.62 | 455.81 | 7.5 |
| E-4 | 459.12 | 457.60 | 455.81 | 7.0 |
| E-5 | 459.13 | 457.67 | 455.81 | 5.5 |
| E-6 | 459.17 | 457.70 | 455.83 | 6.0 |
| E-7 | 459.16 | 457.66 | 455.82 | 5.8 |
| E-8 | 459.15 | 457.70 | 455.79 | 6.3 |
| E-9 | 459.19 | 457.73 | 455.82 | 6.7 |
| E-10 | 459.18 | 457.73 | 455.80 | 6.4 |
| CE-1 | 459.30 | 457.78 | - | - |

(continued)

| Catalyst | $Ti2p_{3/2}$ electron binding energy (eV) | | $S_3$: ($S_3$+$S_2$+$S_1$) | |
|---|---|---|---|---|
| components | First characteristic peak | Second characteristic peak | Third characteristic peak | 100% |
| CE-2 | 459.19 | 457.67 | - | - |
| Note: "-" in Tables 1-3 means that the catalyst component does not have a third characteristic peak. | | | | |

Table 2 $Ti2p_{3/2}$ electron binding energy of titanium in the catalyst components and solid catalyst components

| Catalyst components | $Ti2p_{3/2}$ electron binding energy (eV) | | | $S_3$: ($S_3$+$S_2$ +$S_1$) 100% |
|---|---|---|---|---|
| | First characteristic peak | Second characteristic peak | Third characteristic peak | |
| E-11 | 459.11 | 457.48 | 455.71 | 10.4 |
| E-12 | 459.12 | 457.50 | 455.69 | 12.5 |
| E-13 | 459.09 | 457.47 | 455.66 | 10.7 |
| E-14 | 459.11 | 457.49 | 455.70 | 11.2 |
| E-15 | 459.13 | 457.48 | 455.69 | 10.9 |
| E-16 | 459.08 | 457.46 | 455.69 | 5.9 |
| E-17 | 459.10 | 457.49 | 455.68 | 6.1 |
| E-18 | 459.05 | 457.45 | 455.62 | 5.6 |
| E-19 | 459.10 | 457.47 | 455.65 | 6.0 |
| E-20 | 459.09 | 457.48 | 455.65 | 10.2 |
| E-21 | 459.10 | 457.48 | 455.67 | 11.1 |
| E-22 | 459.07 | 457.45 | 455.64 | 9.9 |
| E-23 | 459.10 | 457.47 | 455.68 | 10.4 |
| CE-3 | 459.11 | 457.59 | - | - |
| CE-4 | 459.13 | 457.61 | - | - |
| CE-5 | 459.08 | 457.51 | - | - |

Table 3 $Ti2p_{3/2}$ electron binding energy of titanium in the catalyst components and solid catalyst components

| Catalyst components | $Ti2p_{3/2}$ electron binding energy (eV) | | | $S_3$: ($S_3$+$S_2$ +$S_1$) 100% |
|---|---|---|---|---|
| | First characteristic peak | Second characteristic peak | Third characteristic peak | |
| E-24 | 459.24 | 457.96 | 455.46 | 5.2 |
| E-25 | 459.22 | 457.93 | 455.45 | 5.3 |
| E-26 | 459.21 | 457.91 | 455.42 | 6.8 |
| E-27 | 459.22 | 457.92 | 455.44 | 6.3 |
| E-28 | 458.97 | 457.54 | 455.44 | 5.4 |
| E-29 | 458.99 | 457.53 | 455.47 | 5.1 |
| E-30 | 459.03 | 457.55 | 455.48 | 5.9 |
| E-31 | 459.07 | 457.60 | 455.50 | 5.2 |
| E-32 | 459.06 | 457.67 | 455.54 | 5.4 |
| E-33 | 459.04 | 457.66 | 455.51 | 6.1 |
| CE-6 | 459.18 | 457.81 | - | - |
| CE-7 | 459.17 | 457.85 | - | - |

(continued)

| Catalyst components | $Ti2p_{3/2}$ electron binding energy (eV) | | | $S_3$: ($S_3$+$S_2$ +$S_1$) 100% |
|---|---|---|---|---|
| | First characteristic peak | Second characteristic peak | Third characteristic peak | |
| CE-8 | 459.18 | 457.80 | - | - |

Table 4 Propylene polymerization results

| No. | Catalyst activity (kgPP /g cat) | Polymer isotactic index (%) | Polymer melt index (g/10 min) | Polymer particle size distribution (%) | | | | | | |
|---|---|---|---|---|---|---|---|---|---|---|
| | | | | >2.0 (mm) | 0.85-2. 0 (mm) | 0.425-0. 85 (mm) | 0.25-0.42 5 (mm) | 0.18-0.2 5 (mm) | 0.15-0.1 8 (mm) | <0. 1 5 (mm ) |
| P-1A | 55.0 | 97.5 | 2.1 | 9.5 | 87.6 | 2.6 | 0.2 | 0.1 | 0 | 0 |
| P-1B | 46.0 | 97.5 | 2.0 | 9.1 | 87.4 | 2.9 | 0.5 | 0.1 | 0 | 0 |
| P-2A | 61.9 | 98.1 | 2.5 | 13.4 | 83.3 | 2.9 | 0.2 | 0.2 | 0 | 0 |
| P-2B | 52.0 | 98.1 | 2.4 | 13.0 | 83.5 | 3.1 | 0.2 | 0.2 | 0 | 0 |
| P-3A | 60.1 | 98.0 | 2.5 | 13.0 | 83.9 | 2.7 | 0.2 | 0.1 | 0 | 0.1 |
| P-3B | 50.5 | 98.0 | 2.4 | 12.8 | 84.0 | 2.8 | 0.2 | 0.1 | 0 | 0.1 |
| P-4A | 52.1 | 98.1 | 2.4 | 14.0 | 82.9 | 2.8 | 0.1 | 0.2 | 0 | 0 |
| P-4B | 44.3 | 98.1 | 2.5 | 13.8 | 83.1 | 2.8 | 0.2 | 0.1 | 0 | 0 |
| P-5A | 54.9 | 97.6 | 2.2 | 8.9 | 88.1 | 2.7 | 0.2 | 0.1 | 0 | 0 |
| P-5B | 46.1 | 97.5 | 2.1 | 9.3 | 87.3 | 2.8 | 0.5 | 0.1 | 0 | 0 |
| P-6A | 61.8 | 98.0 | 2.4 | 12.9 | 83.9 | 2.8 | 0.2 | 0.2 | 0 | 0 |
| P-6B | 51.8 | 98.1 | 2.5 | 12.8 | 83.8 | 3.0 | 0.2 | 0.2 | 0 | 0 |
| P-7A | 59.9 | 98.1 | 2.4 | 13.0 | 83.8 | 2.8 | 0.2 | 0.1 | 0 | 0.1 |
| P-7B | 50.4 | 98.0 | 2.5 | 12.9 | 84.0 | 2.7 | 0.2 | 0.1 | 0 | 0.1 |
| P-8A | 54.8 | 97.4 | 2.3 | 10.2 | 86.7 | 2.8 | 0.2 | 0.1 | 0 | 0 |
| P-8B | 46.3 | 97.5 | 2.2 | 9.6 | 87.2 | 2.7 | 0.4 | 0.1 | 0 | 0 |
| P-9A | 61.5 | 98.0 | 2.4 | 12.8 | 84.0 | 2.8 | 0.2 | 0.2 | 0 | 0 |
| P-9B | 51.8 | 98.1 | 2.5 | 12.9 | 83.4 | 3.2 | 0.2 | 0.2 | 0 | 0 |
| P-10A | 59.8 | 98.0 | 2.4 | 12.8 | 83.8 | 2.8 | 0.2 | 0.2 | 0 | 0.1 |
| P-10B | 50.3 | 98.1 | 2.5 | 12.5 | 84.3 | 2.7 | 0.2 | 0.2 | 0 | 0.1 |
| CP-1A | 52.6 | 98.1 | 2.4 | 13.6 | 83.3 | 2.3 | 0.4 | 0.2 | 0.1 | 0.1 |
| CP-1B | 31.2 | 98.1 | 2.5 | 13.9 | 82.0 | 3.0 | 0.6 | 0.1 | 0.2 | 0.2 |
| CP-2A | 55.0 | 98.1 | 2.6 | 10.9 | 80.5 | 7.3 | 0.7 | 0.3 | 0.2 | 0.1 |
| CP-2B | 33.2 | 98.0 | 2.8 | 9.9 | 80.9 | 6.3 | 2.0 | 0.5 | 0.2 | 0.2 |

Table 5 Propylene polymerization properties

| No. | Catalyst activity (kgPP /g cat) | Decay of catalyst activity, % | Polymer isotactic index (%) | Polymer melt index (g/10min) | Polymer particle size distribution (%) | | | | | | |
|---|---|---|---|---|---|---|---|---|---|---|---|
| | | | | | >2.0 (mm ) | 0.85-2. 0 (mm) | 0.425-0. 85 (mm) | 0.25-0.4 25 (mm) | 0.18 - 0.25 (mm ) | 0.15-0. 18 (mm) | <0.1 5 (mm ) |
| P-11A | 58.0 | | 98.0 | 6.0 | 12.5 | 80.7 | 6.2 | 0.4 | 0.2 | 0 | 0 |
| P-11B | 48.7 | 16 | 98.1 | 6.0 | 12.0 | 81.1 | 6.2 | 0.5 | 0.2 | 0 | 0 |
| P-12A | 59.1 | | 98.3 | 5.9 | 12.3 | 80.7 | 6.3 | 0.5 | 0.1 | 0 | 0.1 |
| P-12B | 49.0 | 17 | 98.3 | 5.8 | 12.0 | 80.2 | 7.0 | 0.5 | 0.2 | 0 | 0.1 |
| P-13A | 56.0 | | 98.2 | 6.1 | 10.0 | 81.4 | 8.0 | 0.4 | 0.1 | 0 | 0.1 |
| P-13B | 47.6 | 15 | 98.2 | 6.1 | 11.6 | 81.2 | 6.5 | 0.5 | 0.1 | 0 | 0.1 |
| P-14A | 57.5 | | 98.0 | 6.1 | 11.0 | 82.5 | 6.0 | 0.4 | 0.1 | 0 | 0 |
| P-14B | 48.3 | 16 | 98.0 | 6.1 | 10.5 | 82.4 | 6.6 | 0.4 | 0.1 | 0 | 0 |
| P-15A | 45.2 | | 98.1 | 6.1 | 12.1 | 81.1 | 6.2 | 0.5 | 0.1 | 0 | 0 |
| P-15B | 38.0 | 16 | 98.0 | 6.0 | 12.4 | 81.0 | 6.0 | 0.4 | 0.2 | 0 | 0 |
| P-16A | 57.8 | | 98.1 | 6.1 | 12.2 | 80.9 | 6.3 | 0.4 | 0.2 | 0 | 0 |
| P-16B | 47.9 | 17 | 98.0 | 6.0 | 11.9 | 81.5 | 6.0 | 0.4 | 0.2 | 0 | 0 |
| P-17A | 58.6 | | 98.2 | 5.8 | 12.1 | 80.8 | 6.4 | 0.5 | 0.1 | 0 | 0.1 |
| P-17B | 49.3 | 16 | 98.3 | 5.9 | 11.9 | 80.3 | 7.1 | 0.4 | 0.2 | 0 | 0.1 |
| P-18A | 55.6 | | 98.2 | 6.0 | 10.2 | 81.2 | 7.9 | 0.5 | 0.1 | 0 | 0.1 |
| P-18B | 47.3 | 15 | 98.2 | 6.1 | 11.2 | 81.4 | 6.8 | 0.4 | 0.1 | 0 | 0.1 |
| P-19A | 57.8 | | 98.0 | 6.1 | 10.9 | 82.3 | 6.2 | 0.5 | 0.1 | 0 | 0 |
| P-19B | 48.6 | 16 | 98.0 | 6.0 | 10.8 | 81.9 | 6.8 | 0.4 | 0.1 | 0 | 0 |
| P-20A | 57.4 | | 98.1 | 6.1 | 11.9 | 81.1 | 6.3 | 0.5 | 0.2 | 0 | 0 |
| P-20B | 48.9 | 15 | 98.0 | 6.1 | 12.1 | 81.2 | 6.1 | 0.4 | 0.2 | 0 | 0 |
| P-21A | 58.8 | | 98.2 | 5.8 | 11.7 | 81.3 | 6.4 | 0.4 | 0.1 | 0 | 0.1 |
| P-21B | 48.7 | 17 | 98.2 | 5.9 | 12.1 | 80.3 | 6.8 | 0.5 | 0.2 | 0 | 0.1 |
| P-22A | 56.5 | | 98.3 | 6.0 | 10.4 | 81.1 | 7.8 | 0.5 | 0.1 | 0 | 0.1 |
| P-22B | 47.3 | 16 | 98.2 | 6.1 | 11.2 | 81.4 | 6.8 | 0.4 | 0.1 | 0 | 0.1 |
| P-23A | 56.8 | | 98.1 | 6.0 | 11.4 | 81.5 | 6.5 | 0.5 | 0.1 | 0 | 0 |
| P-23B | 48.4 | 15 | 98.0 | 6.1 | 10.8 | 81.7 | 6.9 | 0.5 | 0.1 | 0 | 0 |
| CP-3A | 72.0 | | 98.1 | 6.1 | 12.6 | 80.6 | 6.3 | 0.4 | 0.1 | 0 | 0 |
| CP-3B | 25.4 | 65 | 98.1 | 6.1 | 8.0 | 81.4 | 9.1 | 1.4 | 0.1 | 0 | 0 |
| CP-4A | 70.0 | | 98.0 | 6.1 | 12.5 | 80.3 | 6.5 | 0.5 | 0.1 | 0 | 0.1 |
| CP-4B | 37.3 | 47 | 98.0 | 6.1 | 10.1 | 81.0 | 7.2 | 1.5 | 0.1 | 0 | 0.1 |
| CP-5A | 60.0 | | 98.0 | 6.0 | 11.5 | 80.8 | 6.5 | 1.0 | 0.1 | 0 | 0.1 |
| CP-5B | 35.9 | 40 | 98.0 | 6.0 | 10.0 | 81.1 | 7.1 | 1.6 | 0.1 | 0 | 0.1 |

Table 6 Propylene polymerization results

| No. | Catal yst activit y (kgPP /g cat) | Polym er isotact ic index (%) | Polyme r melt index (g/10m in) | Polymer particle size distribution (%) | | | | | | |
|---|---|---|---|---|---|---|---|---|---|---|
| | | | | >2.0 (mm) | 0.85-2. 0 (mm) | 0.425-0.8 5 (mm) | 0.25-0.42 5 (mm) | 0.18-0.2 5 (mm) | 0.15-0.1 8 (mm) | <0.1 5 (mm ) |
| P-24A | 34.6 | 97.8 | 5.1 | 11.4 | 85.4 | 2.8 | 0.2 | 0.2 | 0 | 0 |
| P-24B | 29.4 | 97.9 | 5.0 | 10.6 | 85.5 | 3.4 | 0.2 | 0.2 | 0 | 0 |
| P-25A | 35.5 | 97.5 | 5.2 | 11.5 | 85.2 | 2.8 | 0.2 | 0.1 | 0 | 0.1 |
| P-25B | 30.5 | 97.7 | 5.1 | 11.0 | 85.5 | 3.1 | 0.2 | 0.2 | 0 | 0.1 |
| P-26A | 32.0 | 97.5 | 3.5 | 10.5 | 85.5 | 3.4 | 0.3 | 0.2 | 0 | 0 |
| P-26B | 28.9 | 97.7 | 3.5 | 10.2 | 85.6 | 3.6 | 0.4 | 0.3 | 0 | 0.1 |
| P-27A | 29.2 | 97.6 | 5.1 | 11.1 | 85.9 | 2.6 | 0.1 | 0.2 | 0 | 0.1 |
| P-27B | 24.5 | 97.5 | 5.2 | 11.3 | 85.3 | 3.0 | 0.2 | 0.1 | 0 | 0.1 |
| P-28A | 34.2 | 97.7 | 5.2 | 10.9 | 86.0 | 2.7 | 0.2 | 0.2 | 0 | 0 |
| P-28B | 29.6 | 97.8 | 5.1 | 11.1 | 85.3 | 3.2 | 0.2 | 0.2 | 0 | 0 |
| P-29A | 35.1 | 97.6 | 5.0 | 10.9 | 85.8 | 2.9 | 0.1 | 0.2 | 0 | 0.1 |
| P-29B | 30.3 | 97.8 | 4.9 | 10.8 | 85.4 | 3.2 | 0.2 | 0.2 | 0 | 0.1 |
| P-30A | 31.9 | 97.6 | 3.6 | 11.0 | 85.2 | 3.3 | 0.3 | 0.2 | 0 | 0 |
| P-30B | 27.4 | 97.6 | 3.8 | 10.8 | 81.5 | 3.5 | 0.2 | 0.2 | 0 | 0 |
| P-31A | 34.9 | 97.9 | 5.2 | 10.6 | 86.2 | 2.9 | 0.2 | 0.1 | 0 | 0 |
| P-31B | 29.2 | 97.8 | 5.1 | 11.8 | 84.3 | 3.5 | 0.2 | 0.2 | 0 | 0 |
| P-32A | 35.6 | 97.6 | 5.3 | 10.4 | 86.4 | 2.9 | 0.2 | 0.2 | 0 | 0.1 |
| P-32B | 30.7 | 97.9 | 5.2 | 10.2 | 86.2 | 3.2 | 0.2 | 0.1 | 0 | 0.1 |
| P-33A | 31.8 | 97.6 | 3.6 | 11.7 | 84.1 | 3.6 | 0.3 | 0.1 | 0 | 0 |
| P-33B | 27.2 | 97.7 | 3.4 | 10.8 | 81.6 | 3.9 | 0.2 | 0.1 | 0 | 0 |
| CP-6A | 20.5 | 98.0 | 4.8 | 9.8 | 87.9 | 2.1 | 0.1 | 0.1 | 0 | 0 |
| CP-6B | 11.6 | 97.8 | 4.7 | 8.9 | 85.5 | 4.3 | 0.5 | 0.3 | 0.3 | 0.2 |
| CP-7A | 31.7 | 97.5 | 3.5 | 11.4 | 85.2 | 3.1 | 0.2 | 0.1 | 0 | 0 |
| CP-7B | 13.8 | 97.6 | 3.7 | 10.2 | 80.4 | 7.5 | 0.7 | 0.8 | 0.3 | 0.1 |

(continued)

| No. | Catal yst activit y (kgPP /g cat) | Polym er isotact ic index (%) | Polyme r melt index (g/10m in) | Polymer particle size distribution (%) | | | | | | |
|---|---|---|---|---|---|---|---|---|---|---|
| | | | | >2.0 (mm) | 0.85-2. 0 (mm) | 0.425-0.8 5 (mm) | 0.25-0.42 5 (mm) | 0.18-0.2 5 (mm) | 0.15-0.1 8 (mm) | <0.1 5 (mm ) |
| CP-8A | 30.6 | 97.6 | 3.7 | 10.9 | 84.3 | 4.3 | 0.2 | 0.1 | 0.1 | 0.1 |
| CP-8B | 16.2 | 97.6 | 3.7 | 10.6 | 82.8 | 5.8 | 0.3 | 0.2 | 0.1 | 0.2 |

As can be seen from Tables 1-3, the $Ti2p_{3/2}$ electron binding energy of the titanium component in the solid catalyst component prepared with the preparation method of the invention has changed, the solid catalyst component has specific characteristic peaks which cause variation of the olefin polymerization properties.

As illustrated by Tables 4-6, the solid catalyst component of the invention has high polymerization activity and can meet the requirements of industrial application when it is used in olefin polymerization. Compared with the prepolymerization catalysts in the prior art (e.g., the catalysts prepared in Comparative Examples 1-8), the catalysts prepared in the invention have the advantage that the attenuation of polymerization activity is greatly reduced after the catalysts are stored for 1 year, thus the prepolymerization catalysts with stable polymerization activity can be provided for the industrial production of polypropylene. When the solid catalyst components of the invention are used for olefin polymerization, they exhibit the advantages of a low fine powder content of the polymer.

The catalyst E1 of Example 1 has a specific surface area of 20.2 $m^2/g$, a pore volume of 0.026 $cm^3/g$, and a pore diameter of 5.1nm; the catalyst CE1 of Comparative Example 1 has a specific surface area of 24.3 $m^2/g$, a pore volume of 0.022 $cm^3/g$, and a pore diameter of 5.5nm.

The catalyst E11 of Example 11 has a specific surface area of 31.5 $m^2/g$, a pore volume of 0.035 $cm^3/g$, and a pore diameter of 4.4nm; the catalyst CE3 of Comparative Example 3 has a specific surface area of 32.1 $m^2/g$, a pore volume of 0.034 $cm^3/g$, and a pore diameter of 4.9nm.

The comparison results show that the differences in the specific surface area, pore volume, and pore diameter of the catalysts of the two groups of Examples and Comparative Examples are small, and the characterization parameters can be approximately considered to be the same. The specific surface area, the pore volume, and the pore diameter of the catalysts prepared with the catalyst component A in the Preparation Examples according to the method of the Examples of the invention are not greatly different from those of the catalysts prepared according to the method of the Comparative Examples. Therefore, the slow decay of activity of the catalysts of the present invention has a small correlation with the specific surface area, pore volume, and pore size of the catalysts.

FIG. 1 illustrates an XRD pattern of the solid catalyst component E-1 of Example 1 (upper part) and the solid catalyst component CE-1 of Comparative Example 1 (lower part); as shown in FIG. 1, the XRD spectrogram of the catalyst in Example is almost identical with that of the catalyst in Comparative Example, the XRD pattern of the catalyst prepared with the catalyst component A in the Preparation Example according to the method of the Example of the invention is almost identical with that of the catalyst prepared according to the method of the Comparative Example. Therefore, the slow decay of activity of the catalysts of the present invention has a small correlation with the characteristic peaks illustrated by the XRD pattern of the catalyst.

Meanwhile, the composition of the solid catalyst component of Examples is tested, and it is not discovered that the solid catalyst component contains a detectable amount of the group IVB element other than Ti.

FIG. 2 is a diagram showing the XPS peak-separation fitting of the solid catalyst component E-1 of Example 1 (upper part) and the solid catalyst component CE-1 of Comparative Example 1 (lower part), where the dashed line shows the peak shapes derived from the fitting. As illustrated by FIG. 2, the solid catalyst component CE-1 of Comparative Example 1 has two fitting peaks in the $Ti2p_{3/2}$ orbit, and the solid catalyst component E-1 of Example 1 has three characteristic peaks in the $Ti2p_{3/2}$ orbit. Furthermore, Each of the solid catalyst components of the Examples of the present invention has three characteristic peaks in the $Ti2p_{3/2}$ orbit, but each of the solid catalyst components of Comparative Examples merely has only two characteristic peaks in the $Ti2p_{3/2}$ orbit, as shown in Tables 1-3. As a result, the slow decay of the activity of the catalysts in the present invention correlates with the three characteristic peaks in the XPS spectrogram of the catalysts.

It should be noted that the above-mentioned embodiments only serve to explain the present invention, and do not constitute any limitation to the present invention. The present invention has been described with reference to the typical embodiments, but it shall be understood that the words and expressions used herein are descriptive and explanatory, rather than definitive words and expressions. The amendments to the invention can be implemented within the protection scopes of claims of the invention pursuant to the relevant provisions of the Patent Law, and the modifications on the invention may be performed without deviating from the scopes and spirits of the invention. Although the invention has been described herein with reference to particular methods, materials, and examples, it does not mean that the invention is limited to the specific examples disclosed herein, but rather the invention may extend to all other methods and applications having the same functionality.

## Claims

1. A solid catalyst component for olefin polymerization, is **characterized in that** the solid catalyst component comprises magnesium, titanium, a halogen, a poly($\alpha$-olefin), and an internal electron donor, wherein a Ti2p spectrum obtained from XPS analysis of the solid catalyst component is subjected to peak separation by means of Gaussian-Lorentzian peak-separation fitting, and the result of the peak separation shows that the spectrum peaks of the $Ti2p_{3/2}$ orbit have at

least three characteristic peaks at positions where an electron binding energy is 459.9-454.9 eV; wherein the method of Gaussian-Lorentzian peak-separation fitting includes setting that a Lorentz-Gaussian ratio is 30%, the difference between an electron binding energy of the spectrum peak of the $Ti2p_{1/2}$ orbit and an electron binding energy of the spectrum peak of the $Ti2p_{3/2}$ orbit is 5.9 eV, the half-peak width of the spectrum peak of the $Ti2p_{1/2}$ orbit is 1.7 times the half-peak width of the spectrum peak of the $Ti2p_{3/2}$ orbit, the peak height of the spectrum peak of the $Ti2p_{1/2}$ orbit is 0.28 times the peak height of the spectrum peaks of the $Ti2p_{3/2}$ orbit, and each characteristic peak of the spectrum peaks of the $Ti2p_{3/2}$ orbit has the same half-peak width.

**2.** The solid catalyst component according to claim 1, wherein the spectrum peak of $Ti2p_{3/2}$ orbit of the solid catalyst component has three characteristic peaks at an electron binding energy rang of 459.9eV-454.9eV, the three characteristic peaks are named sequentially as a first characteristic peak, a second characteristic peak, and a third characteristic peak according to the electron binding energy from high to low, wherein the first characteristic peak has an electron binding energy of 459.9eV-458.97eV, the second characteristic peak has an electron binding energy of 458eV-457.45eV, and the third characteristic peak has an electron binding energy of 456.2eV-454.9eV; and/or, the spectrum peak of the $Ti2p_{1/2}$ orbit of the solid catalyst component has an electron binding energy of 467eV-462eV.

**3.** The solid catalyst component according to claim 2, wherein the ratio of the peak area of the third characteristic peak to the sum of the peak areas of the first characteristic peak, the second characteristic peak, and the third characteristic peak is within the range of 5-20%, preferably within the range of 5-15%.

**4.** The solid catalyst component according to any one of claims 1-3, wherein the solid catalyst component does not contain a detectable amount of the group IVB element other than Ti.

**5.** The solid catalyst component according to any one of claims 1-4, wherein the poly($\alpha$-olefin) is selected from poly $C_2$-$C_{10}$ olefins, preferably one or more selected from the group consisting of polyethylene, polypropylene, polybutene, polyoctene, and polyisoprene, more preferably polypropylene.

**6.** The solid catalyst component according to any one of claims 1-4, wherein the internal electron donor is at least one of a diol ester compound, 1,3-diether compound, and carboxylic ester; preferably, the diol ester compound has a chemical structure represented by formula (1):

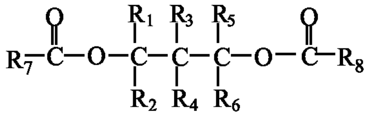

Formula (1)

in the formula (1), $R_1$-$R_6$ are the same or different, each independently selected from hydrogen, amino, $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{10}$ alkaryl, and $C_7$-$C_{10}$ aralkyl; two or more of $R_1$-$R_6$ are optionally bonded to each other to synthesize one or more condensed ring structures; $R_7$ and $R_8$ are the same or different, and each independently selected from the group consisting of $C_1$-$C_{10}$ straight chain alkyl, $C_3$-$C_{10}$ branched chain alkyl, $C_3$-$C_{20}$ cycloalkyl, $C_6$-$C_{20}$ aryl, $C_7$-$C_{20}$ alkaryl, and $C_7$-$C_{10}$ aralkyl;
preferably, the 1,3-diether compound has a chemical structure represented by formula (2):

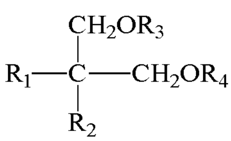

Formula (2)

in the formula (2), $R_1$ and $R_2$ are the same or different, each independently selected from hydrogen, $C_1$-$C_{20}$ straight chain alkyl, $C_3$-$C_{10}$ branched chain alkyl, $C_3$-$C_{20}$ cycloalkyl, $C_6$-$C_{20}$ aryl, $C_7$-$C_{20}$ alkaryl, and $C_7$-$C_{20}$ aralkyl, $R_1$ and $R_2$ are optionally bonded to each other to synthesize condensed ring structures; $R_3$ and $R_4$ are the same or different, and each independently selected from $C_1$-$C_{10}$ alkyl.

**7.** The solid catalyst component according to claim 6, wherein the diol ester compound is at least one selected from the group consisting of 1,3-propanediol dibenzoate, 2-methyl-1,3-propanediol dibenzoate, 2-ethyl-1,3-propanediol dibenzoate, 2,2-dimethyl-1,3-propanediol dibenzoate, 1,3-diphenyl-1,3-propanediol dibenzoate, 1,3-diphenyl-1,3-propanediol di-n-propionate, 1,3-diphenyl-2-methyl-1,3-propanediol dipropionate, 1,3-diphenyl-2-methyl-1,3-propanediol diacetate, 1,3-diphenyl-2,2-dimethyl-1,3-propanediol dibenzoate, 1,3-diphenyl-2,2-dimethyl-1,3-propanediol dipropionate, 1,3-di-t-butyl-2-ethyl-1,3-propanediol dibenzoate, 1,3-diphenyl-1,3-propanediol diacetate, 1,3-diisopropyl-1,3-propanol bis(4-butylbenzoic acid) ester, 1-phenyl-2-amino-1,3-propanediol dibenzoate, 1-phenyl-2-methyl-1,3-butanediol dibenzoate, 2,4-pentanediol dibenzoate, 3-butyl-2,4-pentanediol dibenzoate, 3,3-dimethyl-2,4-pentanediol dibenzoate, 2,4-pentanediol di(p-methylbenzoic acid) ester, 2,4-pentanediol di(p-tert-butylbenzoic acid)ester, 2,4-pentanediol di(p-butylbenzoic acid) ester, 2-methyl-1,3-pentanediol di(p-methylbenzoic acid) ester, 2-butyl-1,3-pentanediol di(p-methylbenzoic acid) ester, 2-methyl-1,3-pentanediol di(p-tert-butylbenzoic acid) ester, 2-methyl-1,3-pentanediol pivalate, 2,2-dimethyl-1,3-pentanediol dibenzoate, 2-ethyl-1,3-pentanediol dibenzoate, 2-butyl-1,3-pentanediol dibenzoate, 2-methyl-1,3-pentanediol dibenzoate, 2-ethyl-1,3-pentanediol dibenzoate, 2-propyl-1,3-pentanediol dibenzoate, 2-butyl-1,3-pentanediol dibenzoate, 3-ethyl-3,5-heptanediol dibenzoate, 4-ethyl-3,5-heptanediol dibenzoate, 3-propyl-3,5-heptanediol dibenzoate, 4-propyl-3,5-heptanediol dibenzoate, 3-butyl-3,5-heptanediol dibenzoate, 2,3-dimethyl-3,5-heptanediol dibenzoate, 2,4-dimethyl-3,5-heptanediol dibenzoate, 2,5-dimethyl-3,5-heptanediol dibenzoate, 4,4-dimethyl-3,5-heptanediol dibenzoate, 4,5-dimethyl-3,5-heptanediol dibenzoate, 4,6-dimethyl-3,5-heptanediol dibenzoate, 6,6-dimethyl-3,5-heptanediol dibenzoate, 2-methyl-3-ethyl-3,5-heptanediol dibenzoate, 2-methyl-4-ethyl-3,5-heptanediol dibenzoate, 2-methyl-5-ethyl-3,5-heptanediol dibenzoate, 3-methyl-4-ethyl-3,5-heptanediol dibenzoate, 3-methyl-5-ethyl-3,5-heptanediol dibenzoate, 4-methyl-3-ethyl-3,5-heptanediol dibenzoate, and 4-methyl-4-ethyl-3,5-heptanediol dibenzoate;
and/or, the 1,3-diether compound is at least one selected from the group consisting of 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2,2-dicyclohexyl-1,3-dimethoxypropane, 2,2-dicyclopentyl-1,3-dimethoxypropane, 2,2-diethyl-1,3-dimethoxypropane, 2, 2-dipropyl-1, 3-dimethoxypropane, 2,2-diisopropyl-1,3-dimethoxypropane, 2,2-dibutyl-1,3-dimethoxypropane, 2-methyl-2-propyl-1,3-dimethoxypropane, 2-methyl-2-benzyl-1,3-dimethoxypropane, 2-methyl-2-ethyl-1,3-dimethoxypropane, 2-methyl-2-isopropyl-1,3-dimethoxypropane, 2-methyl-2-phenyl-1,3-dimethoxypropane, 2-methyl-2-cyclohexyl-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2-isobutyl-2-isopropyl-1,3-dimethoxypropane, 2-(1-methylbutyl)-2-isopropyl-1,3-dimethoxypropane, 2-isopropyl-2-isoamyl-1,3-dimethoxypropane, 2-phenyl-2-isopropyl-1,3-dimethoxypropane, 2-phenyl-2-sec-butyl-1,3-dimethoxypropane, 2-benzyl-2-isopropyl-1,3-dimethoxypropane, 2-cyclopentyl-2-isopropyl-1,3-dimethoxypropane, 2-cyclopentyl-2-sec-butyl-1,3-dimethoxypropane, 2-cyclohexyl-2-isopropyl-1,3-dimethoxypropane, 2-cyclohexyl-2-sec-butyl-1,3-dimethoxypropane, 2-isopropyl-2-sec-butyl-1,3-dimethoxypropane, 2-cyclohexyl-2-cyclohexylmethyl-1,3-dimethoxypropane, and 9,9-dimethoxy methyl fluorene.

**8.** The solid catalyst component according to claim 6, wherein the carboxylic ester is an aliphatic carboxylic ester and/or an aromatic carboxylic ester; preferably, the carboxylic ester is one or more selected from the group consisting of a benzoate compound, a phthalate compound, and a succinate compound;

preferably, the benzoate compound is one or more selected from the group consisting of methyl benzoate, ethyl benzoate, and n-butyl benzoate;
preferably, the phthalate compound is one or more selected from the group consisting of diethyl phthalate, diisobutyl phthalate, di-n-butyl phthalate, diisooctyl phthalate, and di-n-octyl phthalate;
preferably, the succinate compound is one or more selected from the group consisting of diethyl 2,3-diisopropyl succinate, diisobutyl 2,3-diisopropyl succinate, di-n-butyl 2,3-diisopropyl succinate, dimethyl 2,3-diisopropyl succinate, diisobutyl 2,2-dimethyl succinate, diisobutyl 2-ethyl-2-methyl succinate, and diethyl 2-ethyl-2-methyl succinate.

**9.** The solid catalyst component according to any one of claims 1-8, wherein the internal electron donor comprises an internal electron donor a and an internal electron donor b, the internal electron donor a and the internal electron donor b have two options:

Option I: the internal electron donor a is selected from the diol ester compound, and the internal electron donor b is selected from the 1,3-diether compound and an optional carboxylic ester;
Option II: the internal electron donor a is selected from the 1,3-diether compound, and the internal electron donor b is selected from the phosphate ester compound represented by formula (3);

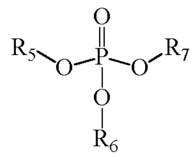

Formula (3)

in the formula (3), $R_5$, $R_6$ and $R_7$ are the same or different, each independently selected from $C_1$-$C_4$ straight chain alkyl, $C_3$-$C_4$ branched chain alkyl, $C_3$-$C_{20}$ cycloalkyl, $C_6$-$C_{20}$ aryl, $C_7$-$C_{20}$ alkaryl, and $C_7$-$C_{20}$ aralkyl; preferably, the phosphate ester compound is at least one selected from the group consisting of trimethyl phosphate, triethyl phosphate, tributyl phosphate, triphenyl phosphate, tricresyl phosphate, triisopropylphenyl phosphate, phenyldimethyl phosphate, tolyldibutyl phosphate, dimethyl isopropylphenyl phosphate, diethyl isopropylphenyl phosphate, dibutyl isopropylphenyl phosphate, phenyl dimethylphenyl phosphate, phenyl diisopropylphenyl phosphate, p-tolyldibutyl phosphate, m-tolyldibutyl phosphate, p-isopropylphenyl dimethyl phosphate, p-isopropylphenyl diethyl phosphate, p-tert-butylphenyl dimethyl phosphate, and o-tolyl p-di-tert-butyl phenyl phosphate.

**10.** The solid catalyst component according to claim 9, wherein the mass ratio of the internal electron donor a to the internal electron donor b is (0.1-1,000): 1.

**11.** The solid catalyst component according to any one of claims 1-10, wherein the total weight of the solid catalyst component is the calculation basis, the solid catalyst component has a magnesium content of 1-18 wt%, a titanium content of 0.1-3.5 wt%, a halogen content of 2-65 wt%, a poly(α-olefin) content of 0.1-89 wt%, and an internal electron donor content of 0.6-15 wt%.

**12.** A method for preparing a solid catalyst component for olefin polymerization, is **characterized in that** the method comprises the following steps:

(1) contacting a catalyst component A, alkylaluminum, and an external electron donor in the presence of an inert solvent to carry out a reaction; the catalyst component A contains titanium, magnesium, halogen, and an internal electron donor;
(2) mixing the reaction system obtained in step (1) with α-olefin to carry out a polymerization reaction;
(3) removing the unreacted α-olefin in step (2), and adding hydrogen gas into the obtained reaction system for carrying out a reaction.

**13.** The method according to claim 12, wherein the molar ratio of dosage of the alkylaluminum, the external electron donor compound, and the catalyst component A calculated in terms of titanium is (1-50): (0.2-10): 1;

and/or, the alkylaluminum contains 1-3 alkyl groups, the alkyl group is $C_1$-$C_8$ alkyl; more preferably, the alkylaluminum is one or more selected from the group consisting of triethyl aluminum, triisobutyl aluminum, tri-n-butyl aluminum, tri-n-hexyl aluminum, and diethyl aluminum chloride;
and/or, the external electron donor compound is at least one selected from silicon-containing compounds, preferably one or more selected from the group consisting of cyclohexyl methyl dimethoxy silane, diisopropyl dimethoxy silane, n-butyl dimethoxy silane, diisobutyl dimethoxy silane, diphenyl dimethoxy silane, methyl-t-butyl dimethoxy silane, and dicyclopentyl dimethoxy silane;
and/or, the internal electron donor comprises at least one of diol ester compound, 1,3-diether compound, and carboxylic ester;
and/or, the α-olefin is selected from $C_2$-$C_{10}$ olefin, preferably one or more selected from the group consisting of ethylene, propylene, butylene, octane, and isoamylene, more preferably propylene.

**14.** The method according to claim 12 or 13, wherein the reaction conditions in step (1) comprise a temperature of 0-30°C, preferably 15-25°C; a time of 1-30min, preferably 10-20min;

and/or, the polymerization reaction conditions in step (2) comprise a temperature of 0-50°C, preferably 15-25°C; a time of 5-30min, preferably 10-20min;
and/or, the reaction conditions in step (3) comprise a temperature of 0-50°C, preferably 15-25°C; a time of 5-30min, preferably 10-20min;
and/or, in step (3), the addition amount of hydrogen gas is controlled to maintain the reaction pressure within the

range of 0.01-1MPa;
and/or, in step (2), the mass ratio of the α-olefin to the catalyst component A is (0.04-10): 1.

**15.** The solid catalyst component prepared with the method according to any one of claims 12-14.

**16.** A catalyst system for olefin polymerization, is **characterized in that** the catalyst system comprises the solid catalyst component according to any one of claims 1-11 and/or the solid catalyst component prepared with the method according to any one of claims 12-14, alkylaluminum and an optional external electron donor compound or a reaction product thereof.

**17.** Use of the solid catalyst component according to any one of claims 1-11 and/or the solid catalyst component prepared with the method according to any one of claims 12-14 and/or the catalyst system according to claim 16 in the olefin polymerization.

**18.** A method of olefin polymerization, is **characterized in that** the method comprises: subjecting the olefins to the polymerization reaction in the presence of the solid catalyst component according to any one of claims 1-11, and/or the solid catalyst component prepared with the method according to any one of claims 12-14, and/or the catalyst system according to claim 16;

preferably, the olefins are represented by the general formula $CH_2$=CHR, R is hydrogen, or $C_1$-$C_6$ alkyl, or $C_6$-$C_{10}$ aryl;
preferably, the polymerization reaction temperature is within the range of 0-150°C, more preferably within the range of 60-90°C.

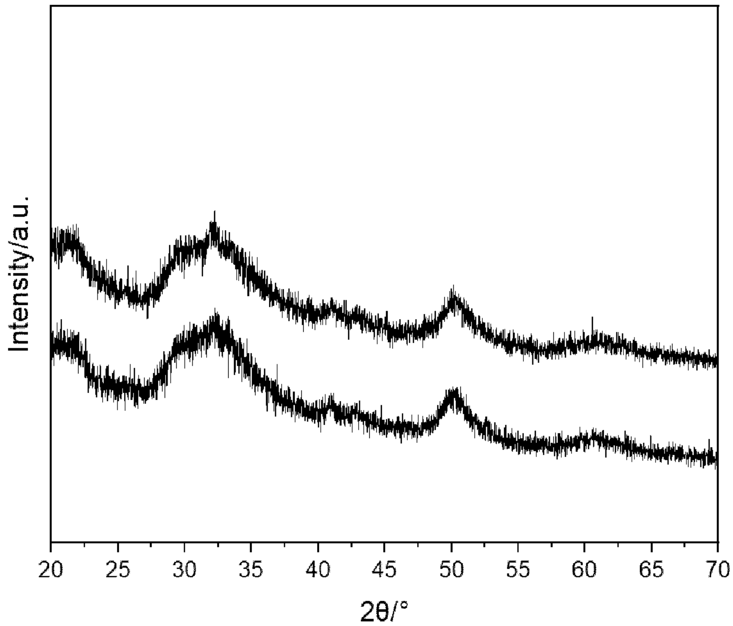

Intensity/a.u.
20 25 30 35 40 45 50 55 60 65 70
2θ/°


FIG. 1

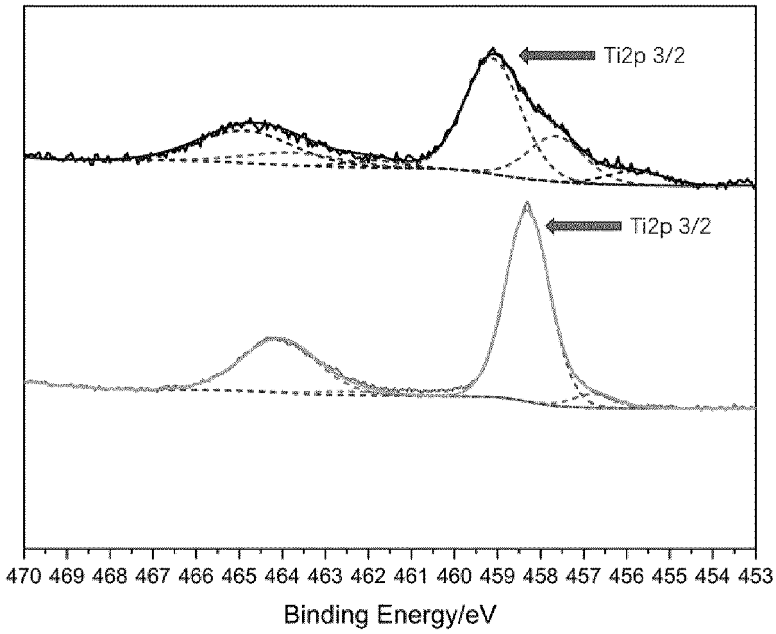

Ti2p 3/2
Ti2p 3/2
470 469 468 467 466 465 464 463 462 461 460 459 458 457 456 455 454 453
Binding Energy/eV


FIG. 2

**INTERNATIONAL SEARCH REPORT**

International application No.
**PCT/CN2023/126424**

**A. CLASSIFICATION OF SUBJECT MATTER**

C08F4/649(2006.01)i; C08F4/654(2006.01)i; C08F4/646(2006.01)i; C08F110/06(2006.01)i; C08F110/00(2006.01)i; C08F10/06(2006.01)i; C08F10/00(2006.01)i

According to International Patent Classification (IPC) or to both national classification and IPC

**B. FIELDS SEARCHED**

Minimum documentation searched (classification system followed by classification symbols)

IPC: C08F

Documentation searched other than minimum documentation to the extent that such documents are included in the fields searched

Electronic data base consulted during the international search (name of data base and, where practicable, search terms used)

CNTXT; ENTXT; WPABS; DWPI; ISI Web of Science; CNKI; 万方, WANFANG: 中国石油化工, 中石化, 化工研究院, 刘月祥, 刘涛, 谢吉嘉, 夏先知, 周俊领, 宋阳, 赵瑾, 凌永泰, 周奇龙, 李威莅, 徐秀东, 陈龙, 任春红, 杨睿, 马长友, 高富堂, 谭扬, 何策, 催化, Ti , 钛, 镁, Mg, 烯烃, 乙烯, 丙烯, 预聚, 氢, H2, XPS, X射线光电子能谱, titanium, magnesium, catalyst?, prepolymer+, pre-polymer+, propylene, ethylene, olefin, C2, C3, hydrogeniz+

**C. DOCUMENTS CONSIDERED TO BE RELEVANT**

| Category* | Citation of document, with indication, where appropriate, of the relevant passages | Relevant to claim No. |
|---|---|---|
| A | CN 112175117 A (CHINA PETROCHEMICAL CORP. et al.) 05 January 2021 (2021-01-05) claims 1-17 | 1-18 |
| A | CN 112175115 A (CHINA PETROCHEMICAL CORP. et al.) 05 January 2021 (2021-01-05) entire document | 1-18 |
| A | CN 112175118 A (CHINA PETROCHEMICAL CORP. et al.) 05 January 2021 (2021-01-05) entire document | 1-18 |
| A | CN 112175119 A (CHINA PETROCHEMICAL CORP. et al.) 05 January 2021 (2021-01-05) entire document | 1-18 |
| A | US 2014094576 A1 (BASELL POLIOLEFINE ITALIA S.R.L.) 03 April 2014 (2014-04-03) entire document | 1-18 |
| A | US 2014378631 A1 (BASELL POLIOLEFINE ITALIA S.R.L.) 25 December 2014 (2014-12-25) entire document | 1-18 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 January 2024** | **04 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/126424**

| Patent document cited in search report | | | Publication date (day/month/year) | Patent family member(s) | | | Publication date (day/month/year) |
|---|---|---|---|---|---|---|---|
| CN | 112175117 | A | 05 January 2021 | CN | 112175117 | B | 21 July 2023 |
| CN | 112175115 | A | 05 January 2021 | CN | 112175115 | B | 21 July 2023 |
| CN | 112175118 | A | 05 January 2021 | | None | | |
| CN | 112175119 | A | 05 January 2021 | CN | 112175119 | B | 15 August 2023 |
| US | 2014094576 | A1 | 03 April 2014 | WO | 2012168140 | A1 | 13 December 2012 |
| | | | | EP | 2718335 | A1 | 16 April 2014 |
| | | | | EP | 2718335 | B1 | 22 January 2020 |
| | | | | BR | 112013030614 | A2 | 13 December 2016 |
| | | | | CN | 103562233 | A | 05 February 2014 |
| | | | | ES | 2773905 | T3 | 15 July 2020 |
| US | 2014378631 | A1 | 25 December 2014 | BR | 112014014634 | A2 | 13 June 2017 |
| | | | | ES | 2559602 | T3 | 15 February 2016 |
| | | | | WO | 2013092282 | A1 | 27 June 2013 |
| | | | | EP | 2794680 | A1 | 29 October 2014 |
| | | | | EP | 2794680 | B1 | 09 December 2015 |
| | | | | EP | 2607387 | A1 | 26 June 2013 |
| | | | | CN | 104334591 | A | 04 February 2015 |
| | | | | CN | 104334591 | B | 22 February 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211320920
- CN 202211321506
- CN 202211321006X
- CN 202211321023
- CN 202211321504
- US 9453088 B2
- CN 1421468 A
- US 7329714 B2
- WO 2012034357 A1
- WO 2012097680 A1